# EUROPEAN PATENT APPLICATION

(11) **EP 1 213 599 A2**
(43) Date of publication of application: **12.06.2002**
(21) Application number: 01302385.8
(22) Date of filing: 14.03.2001
(51) Int. Cl.: G02F 1/1335, G02B 5/08

(54) **Heat resistant reflecting layer**

(30) Priority: 07.12.2000 JP 2000373602
(71) Applicant: FURUYA METAL CO., LTD., Tokyo 170-0005 (JP)
(72) Inventor: Ueno, Takashi, c/o Furuya Metal Co. Ltd., Toshima-ku, Tokyo 170-0005 (JP)
(74) Representative: Sherrard-Smith, Hugh

(57) **Abstract**

A heat-resistant reflecting layer includes Ag as a main component, a 0.1-3.0 wt% first element selected from the group consisting of Au, Pd, and Ru, a 0.1-3.0 wt% second element selected from the group consisting of Cu, Ti, Cr, Ta, Mo, Ni, Al, Nb, Au, Pd, and Ru. The second element is different from the first element. The reflecting layer maintains the high optical reflection index of Ag. The reflecive layer has improved material stability and is stable when exposed to alkaline organic materials. The reflecting layer can be used as a reflector and a reflective wiring electrode for a liquid crystal display device, and as building glass for reflecting heat rays or infrared rays.

## Description

The present invention relates to a highly heat-resistant reflecting layer, which is used for producing a reflector or a reflective wiring electrode of a liquid crystal display device, a reflecting layer for building glass, a laminate, or a liquid crystal display device. More particularly, the present invention relates to an Ag-alloy reflecting layer that has a high reflection index, a laminate formed by the reflecting layer, and a liquid crystal display device having the reflecting layer or the laminate.

Various materials are used for reflecting layers including a reflecting layer for producing a reflector or a reflecting wiring electrode of a liquid crystal display device and a reflecting layer for building glass that reflects infrared rays and heat rays. In addition, laminates of the reflecting layers are developed to increase the reflection index and to improve the functionality of the products. The products of the reflecting layers, which have improved characteristics, have been used in various fields and for various applications.

Typical materials for the reflecting layers are Al, an Al alloy that includes Al as its main component, Ag, an Ag alloy that includes Ag as its main component (such as Ag-Pd), and an Au alloy. The reflecting layers formed of such materials have high reflection index in the optical wavelength regions from 400 to 4000 nm, which include both visible and infrared regions.

Al has high reflection index and is very inexpensive and useful. Al and an Al alloy are usually used for the reflector and the reflective wiring electrode of reflection-type liquid crystal display devices. Such liquid crystal display devices are used for portable terminal devices such as cellular phones. When an Al alloy is used, problems associated with pure Al such as irregularities in the layer, which are called hillocks, and deterioration of the face of the reflector and the reflective wiring electrode can be overcome. When the reflection index of the reflector and the reflective wiring electrode is high, the electric power sent to the light source is reduced and the illuminance of the liquid crystal display device increases by about 20 %.

Ag has the highest reflection index among many metal elements in the optical wavelength regions from 400 to 4000 nm. Therefore, Ag has good characteristics for a reflecting layer.

Among visible rays, infrared rays, and ultraviolet rays that are emitted from the sun, Al, Al alloy, Ag, and Ag alloy transmit the visible rays and reflect the infrared rays and heat rays. The visible rays have direct relation with lighting. The reflection of the infrared rays and the heat rays is effective to prevent the outside rays from coming into a room. Therefore, the above materials are used for building glass such as windowpanes.

However, conventional reflecting layers formed of Al, Al alloy, Ag, Ag alloy including Ag-Pd, Au, Au alloy, and reflectors, reflective wiring electrodes, and building glass that are formed of the reflecting layers have the following problems.

Al and an Al alloy are chemically unstable. A liquid resist, which is made of organic material, is applied to the Al layer or the Al alloy layer, and a pattern is formed on the layer. When the patterned layer is washed with an alkali solution to remove the resist, the surface of the layer may become rough and lowering of the reflection index or scattering of the light on the surface may occur. In addition, Al may react with gas generated from a resin substrate when used with a resin substrate such as PMMA (polymethyl methacrylate) and silicone. Al can be used only with substrates that generate little gas and thus limits materials available for the substrates. There is a problem of chemical stability in Al-containing reflecting layers and resin substrates when they contact each other in use.

Al and Al alloy have greater optical absorptivity than Ag and Ag alloy. Therefore, semi-transmissive reflecting layer formed of Al and Al alloy suffers optical loss.

Al, an Al alloy, Ag, and an Ag alloy have poor heat resistance. Diffusion of atoms is likely to occur on the surface of a reflecting layer formed of such materials in given temperatures. Particularly, Ag has high self-diffusion energy for heat and it changes over time when heat is applied. When heat causes the temperature of the reflecting layer to rise to about 100 °C, even if temporarily, diffusion of atoms will occur on the surface of the layer and the layer will lose luster and become dull. In other words, Ag's characteristic feature of high reflection index is impaired. Therefore, it is necessary to limit the temperature during the manufacturing process of a reflector for a liquid crystal display device when it is formed of Al or Ag. Further, an Al or Ag reflecting layer for building glass is thermally instable and chemically varies (e.g. changes in color) when exposed the warm air in summer.

Al, Al alloy, Ag, and Ag alloy vary greatly over time with heat so that such materials cannot be exposed directly to air. Therefore, to ensure material stability of the reflecting layer, a heat-resistant protective layer such as ZnO₂ or a ZnO₂-Al₂O₃ composite oxide is generally needed.

The reflecting layers formed of Al, Al alloy, Ag, and an alloy have very poor adhesion toward some substrates. In such combinations, the reflecting layer separates from the substrate immediately after it is deposited or after it is left on the substrate for a long time. To improve adhesion between the reflecting layer and the substrate, various base films must be positioned between them.

The reflection index of Ag or Ag alloy is the highest in visible regions, i.e., the optical wavelength regions from 400 to 800 nm. However, in the wavelength regions below 450 nm, the absorptivity and absorption coefficient of Ag increase and the intensity of yellow reflected light is increased. Accordingly, a liquid crystal display device formed by a Ag-containing reflecting layer and a portable terminal device including the liquid crystal display device have a poor appearance and become yellow over time.

Further, Ag is not superior in weather resistance. When left in the air, Ag absorbs moisture (especially water) in the air and turns yellow. Long after an Ag-containing reflecting layer is formed on the glass substrate or the resin substrate, Ag's characteristic feature of high reflection index is impared.

An Ag-Pd alloy including Ag and 1-3 wt% Pd, an Ag-Au alloy including Ag and 1-10 wt% Au, and an Ag-Ru alloy including Ag and 1-10 wt% Ru are well known as binary Ag alloys that have high corrosion resistance and high heat resistance. However, black stains are observed even in the alloy layers formed of these Ag alloys when a weatherproof test is conducted under high temperature and high humidity conditions. It is comfirmed under an optical microscope that the black stains are portions that turned black and were caused to protrude after Pd reached a limitation of solid solution with respect to H₂ dissolution. When used as building glass, the above binary alloy lacks long-term stability in humid regions or when exposed to condensation droplets.

Ag-Au alloy is well known as a stable alloy in which Ag and Au are perfectly mixed in solid states. The resistance of the Ag-Au alloy to halogen elements such as chlorine is not excellent. The Ag-Au alloy binds to chlorine or iodine in the air, which is introduced during the test, at atomic level, and produces the black stains.

Aside from Al and Ag, Au is also known for its high reflection index. However, Au is very expensive and impractical to use for the reflector of a liquid crystal display device or the reflecting layer for building glass.

It is an object of the present invention to provide a reflecting layer that maintains a high optical reflection index, which is characteristic of Ag, and has improved material stability including heat resistance and weather resistance.

It is another object of the present invention to provide a laminate including a coating layer that allows the laminate to maintain the high optical reflection index of an Ag-containing reflecting layer and to have lower absorptivity at short wavelengths.

It is yet another object of the present invention to provide a laminate including a base film that enhances adhesion between an Ag-containing reflecting layer and a substrate.

It is a further object of the present invention to provide a liquid crystal display device having the reflective layer or the laminate described above.

A reflecting layer of the present invention comprises Ag as a main component, a 0.1-3.0 wt% first element selected from the group consisting of Au, Pd, and Ru, and a 0.1-3.0 wt% second element selected from the group consisting of Cu, Ti, Cr, Ta, Mo, Ni, Al, Nb, Au, Pd, and Ru. The second element is different from the first element.

One laminate comprises a substrate and a reflecting layer deposited on the substrate. The reflecting layer includes Ag as a main component, a 0.1-3.0 wt% first element selected from the group consisting of Au, Pd, and Ru, and a 0.1-3.0 wt% second element selected from the group consisting of Cu, Ti, Cr, Ta, Mo, Ni, Al, Nb, Au, Pd, and Ru. The second element is different from the first element.

Another laminate comprises a substrate, a base film deposited on the substrate, and an Ag-containing reflecting layer deposited on the base film. The base film is made of at least one of Si, Ta, Ti, Mo, Cr, Al, ITO, ZnO₂, SiO₂, TiO₂, Ta₂O₅, ZrO₂, In₂O₃, SnO₂, Nb₂O₅, and MgO.

Yet another laminate comprises an Ag-containing reflecting layer and a coating layer deposited on the reflecting layer. The coating layer includes In₂O₃ as a main component and at least one of SnO₂, Nb₂O₅, SiO₂, MgO, and Ta₂O₅.

A liquid crystal display device including the reflective layer or the laminate described above and a portable terminal device having the liquid crystal display device are also provided.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

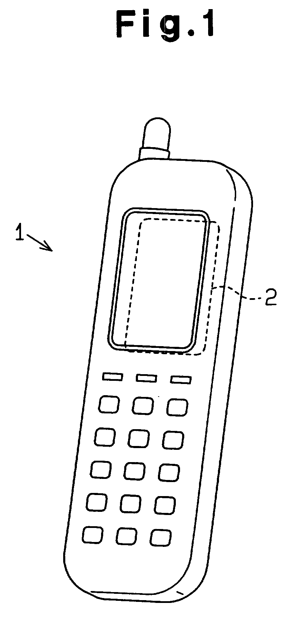

Fig.1 is a perspective view of a portable terminal device including a liquid crystal display device.

An Ag-alloy reflecting layer of the present inventiorr comprises:
i) Ag as a main component;
ii) a 0.1-3.0 wt% first element selected from the group consisting of Au, Pd, and Ru; and
iii) a 0.1-3.0 wt% second element selected from the group consisting of Cu, Ti, Cr, Ta, Mo, Ni, Al, Nb, Au, Pd, and Ru, wherein the second element is different from the first element.

The addition of Au, Pd, or Ru to Ag improves the weather resistance of Ag under high temperature and high humidity conditions. Ag, which is the main component, has very high thermal conductivity and tends to absorb heat and is quickly saturated with heat at the atomic level. Au, Pd, and Ru decrease the thermal conductivity of Ag and inhibit movement among atoms. Au, Pd, and Ru form whole solid solution. The content of Au, Pd, and Ru is preferably from 0.7 to 2.3 wt%, most preferably 0.9 wt%.

Cu, Ti, Cr, Ta, Mo, Ni, Al, and Nb, in combination with Au, Pd, and Ru, improve the heat resistance and weather resistance of the Ag-alloy reflecting layer. The content of Cu, Ti, Cr, Ta, Mo, Ni, Al, and Nb is preferably from 0.5 to 2.5 wt%, most preferably 1.0 wt%.

Without Cu, Ti, Cr, Ta, Mo, Ni, Al, or Nb, two or more of Au, Pd, and Ru may be contained in the reflecting layer to improve the heat resistance and weather resistance of the reflecting layer.

In the reflecting layer of the present invention, compared with reflecting layers of pure Al and pure Ag, movement of surface particles is poor. In other words, the self-diffusion energy of Ag upon heating is reduced in the reflecting layer of the present invention. Accordingly, the reflecting layer of the present invention resists self-diffusion, which improves heat resistance of the reflecting layer. The reflecting layer is heated during the manufacturing process or under a certain weather condition. In the reflecting layer of the present invention, a decrease in the reflection index is prevented. Specifically, when the reflecting layer is heated over 100 °C, a visual change in the reflecting layer (to a dull white color) due to self-diffusion and an increase in light absorption due to deformation of the surface are prevented.

The reflecting layer of the present invention has high heat resistance, a high reflection index, and is stable when exposed to alkaline organic materials. Further, the reflecting layer is chemically stable to gas emitted from a resin substrate. High heat resistance and reflection index are required for a reflector or a reflective wiring electrode of the reflection-type liquid crystal display device and a heat-ray or infrared-ray reflecting layer for building glass. The reflecting layer of the present invention may be used for all of them.

The reflecting layer of the present invention may be produced either by sputtering or by deposition. The reflecting layers of the present invention are stable regardless of its manufacturing process and have stable characteristics for various purposes and for many kinds of substrates.

A coating layer, which is highly heat-resistant, may be laid on the Ag-containing reflecting layer. The coating layer includes In₂O₃ as a main component and at least one of SnO₂, Nb₂O₅, SiO₂, MgO and Ta₂O₅. The reflecting layer may be of pure Ag or an Ag alloy. In either case, high reflection index of the reflecting layer is maintained and absorptivity at short wavelengths is reduced compared with a reflecting layer without a coating layer.

The reflecting layer of the present invention, together with a resin substrate or a glass substrate, may form a laminate. When a resin substrate of specific purity or composition is used, a large amount of gas occurs. It is very likely that metal will react with the gas, and an unstable film, such as an oxide film, will form at the interface between the reflecting layer and the resin ) substrate. In this case, metal oxide is better than a metal element for preventing reductive reaction. To eliminate the above disadvantage, a base film for promoting adhesion may be placed between the reflecting layer and the resin substrate or the glass substrate.

The base film for a glass substrate may include Si, Ta, Ti, Mo, Cr, Al, ITO (the composite oxide of In oxide and Sn oxide) , ZnO₂, SiO₂, TiO₂, Ta₂O₅, ZrO₂, In₂O₃, SnO₂, Nb₂O₅, or MgO.

A base film that is made of elemental metals such as Si, Ta, Ti, Mo, Cr, and Al may be formed by deposition (or evaporation), sputtering, CVD, or ion plating. These processes can be used consecutively in producing the base film and the Ag alloy reflecting layer, which facilitates the manufacture of the layers.

A base film that is made of metal oxides such as ITO, ZnO₂, SiO₂, TiO₂, Ta₂O₅, ZrO₂, In₂O₃, SnO₂, Nb₂O₅, and MgO may also be formed easily by deposition, sputtering, or ion plating. For example, when an IR reflecting layer for a windowpane is formed, a layer of the uniform reflection characteristics may be formed by any of the above processes.

When the base film is placed under the reflecting layer, thermal stability of the laminate is ensured. The optical characteristics of the laminate are maintained regardless of the types of reflecting layers (whether pure Ag or an Ag alloy). Even when the coating layer is laid on the reflecting layer, the thermal stability of the laminate is still ensured and the optical characteristics of the laminate are maintained regardless of the types of reflecting layers.

The glass substrates for liquid crystal display devices and the glass substrate for building glass are large in size. For such substrates, a fine structure and accurate surface profile across the thickness are very important for the formed layers. Therefore, sputtering is preferred. When the base film is formed by sputtering, the atmosphere in the sputtering device is evacuated to form a stable base film. When the resin substrate is used, gas occurs during the evacuation and the vacuum level is not raised. Therefore, for the resin substrate, the deposition process is preferred.

The base film for the resin substrate especially requires chemical stability. Thus, the base film for the resin substrate is preferably a thin film of metal oxide. When used with the reflecting layer of the present invention, the base film for the resin substrate preferably includes ITO, ZnO₂, SiO₂, TiO₂, Ta₂O₅, ZrO₂, In₂O₃, SnO₂, Nb₂O₅, or MgO, more preferably, ITO, ZnO₂, SiO₂, TiO₂, Ta₂O₅, or ZrO₂.

To have the improved electrical characteristics of a reflective wiring electrode, a base film preferably includes a conductive metal oxide of ITO, ZrO₂ or a composite oxide about a thickness of 1-10 nm. This base film is highly insulative and volume resistivity of the laminate, which includes the Ag alloy reflecting layer and the base film, is substantially improved. Thus, the characteristics of the reflecting layer are maintained with the base film.

To inhibit the deterioration of optical characteristics such as the reflection index and the refraction index, a base film preferably includes SiO₂, TiO₂, Ta₂O₅, ZrO₂, In₂O₃, SnO₂, Nb₂O₅, or MgO. Since SiO₂ absorbs less light at the optical wavelength regions from 400 to 4000 nm, it can inhibit the deterioration of the reflection index due to the increase in absorptivity. Since TiO₂, Ta₂O₅, ZrO₂, In₂O₃, SnO₂, Nb₂O₅, and MgO have high refractive indices and low absorptivities, they are also preferred.

When the base film is used, the degree of adhesion and the optical characteristics of the laminate are improved and the thermal stability of the laminate is maintained. The optical characteristics of the laminate are maintained regardless of the types of the reflecting layers (whether pure Ag or an Ag alloy). Thus, the reflecting layers of the present invention achieve the best performance.

As shown in Fig.1, a portable terminal device 1 includes a liquid crystal display device 2. The liquid crystal display device 2 is formed by a reflector on a lower glass substrate, a color filter, a polarizing layer, a liquid crystal layer, a polarizing layer, a transparent conductive layer, and an upper glass substrate, which are laminated in order. The laminate of the present invention, which serves as the reflector, is protected from alkaline materials generated during the manufacturing process of the color filter. The laminate has a higher reflection index and a lower optical absorptivity than the reflector of pure Al or an Al alloy, and a liquid crystal display device 2 having the laminate suffers less optical loss. The brightness of a liquid crystal display device 2 having the laminate of the present invention is greater than that of a liquid crystal display device having the reflector of pure Al or Al alloy. A portable terminal device 1 having such a liquid crystal display device 2 has an improved display. Therefore, the quality of the product is improved.

### Examples

### Comparison

Ag-alloy reflecting layers were produced from the binary Ag alloys. Binary means two elements, i.e., Ag as a main component and Au, Pd or Ru. The content of Au, Pd or Ru was 0.1-4.0 wt%.

Firstly, an Ag target and a Pd target are installed in a magnetron sputtering apparatus. Electrical discharges to the Ag and Pd targets were controlled at the specific RF power. Ar (Argon) gas was selectively set within the range from 0.1 to 3.0 Pa. The two metal elements were simultaneously sputtered to form binary Ag-alloy layers that contain Pd at several different levels. Ag-alloy layers that contain Au or Ru at several different levels were also produced.

Quartz substrates, which are 100 mm×100 mm×1.1 t in size, were used as a substrate. The temperature of the substrates during the sputtering process was room temperature (about 25 °C). Using Ar gas as an exclusive sputtering gas in an high vacuum atmosphere where the ultimate vacuum level was 3×10E-6 Pa, the Ag-alloy layer was deposited on the quartz substrate so that the thickness of the layer was 20 nm.

The reason for depositing the Ag-alloy layer in the high vacuum atmosphere is to prevent impure gas from staying in the layer and to make the layer compact. Thus, the desired characteristics of the Ag-alloy material are ensured.

The resultant Ag-alloy layers were kept on a hot plate for about 2 hours. Then the layers were observed. The presence or absence of visual change (to a dull white color) in the layer surface and the time when the visual change occurred were examined. The hot plate was heated to 250 °C at a heating rate of 20 °C/min by resistance heating. The reflection index of the Ag-alloy layers before and after heating was also examined. The results are shown in Table 1.

**Table 1**

| Material composition (wt%) | Surface state of the layer after heating at 250 °C | The time when the visual change occurred | Differences of reflection index before and after heating (wavelength of 800 nm) |
|---|---|---|---|
| Ag | dull white color over the surface | 100 °C | -25 % |
| Ag99.9Pd0.1 | dull white color over the surface | 100 °C | -22 % |
| Ag99.5Pd0.5 | dull white color over the surface | 100 °C | -22 % |
| Ag99.0Pd1.0 | dull white color over the surface | 120 °C | -21 % |
| Ag98.5Pd1.5 | dull white color over the surface | 120 °C | -21 % |
| Ag98.0Pd2.0 | dull white color over the surface | 130 °C | -20 % |
| Ag97.5Pd2.5 | dull white color at the middle portion | 150 °C | -7.4 % (unchanged region was measured) |
| Ag97.0Pd3.0 | weak white color around the middle portion | 150 °C | -6.5 % (unchanged region was measured) |
| Ag96.5Pd3.5 | weak white color around the middle portion | 150 °C | -6.1 % (unchanged region was measured) |
| Ag96.0Pd4.0 | weak white color around | 150 °C | -6.1 % (unchanged region |
| | the middle portion | | was measured) |
| | | | |
| Ag99.9Au0.1 | dull white color over the surface | 100 °C | -22 % |
| Ag99.5Au0.5 | dull white color over the surface | 100 °C | -22 % |
| Ag99.0Au1.0 | dull white color over the surface | 120 °C | -21 % |
| Ag98.5Au1.5 | dull white color over the surface | 120 °C | -21 % |
| Ag98.0Au2.0 | dull white color over the surface | 130 °C | -21 % |
| Ag97.5Au2.5 | dull white color at the middle portion | 150 °C | -7.0 % (unchanged region was measured) |
| Ag97.0Au3.0 | weak white color around the middle portion | 150 °C | -6.5 % (unchanged region was measured) |
| Ag96.5Au3.5 | weak white color around the middle portion | 150 °C | -6.0 % (unchanged region was measured) |
| Ag96.0Au4.0 | weak white color around the middle portion | 150 °C | -6.0 % (unchanged region was measured) |
| | | | |
| Ag99.9Ru0.1 | dull white color over the surface | 100 °C | -22 % |
| Ag99.5Ru0.5 | dull white color over the surface | 100 °C | -22 % |
| Ag99.0Ru1.0 | dull white color over the surface | 120 °C | -21 % |
| Ag98.5Ru1.5 | dull white color over the surface | 120 °C | -20 % |
| Ag98.0Ru2.0 | dull white color over the surface | 130 °C | -20 % |
| Ag97.5Ru2.5 | dull white color at the middle portion | 150 °C | -7.4 % (unchanged region was measured) |
| Ag97.0Ru3.0 | weak white color around the middle portion | 150 °C | -6.5 % (unchanged region was measured) |
| Ag96.5Ru3.5 | weak white color around the middle portion | 150 °C | -6.1 % (unchanged region was measured) |
| Ag96.0Ru4.0 | weak white color around the middle portion | 150 °C | -6.1 % (unchanged region was measured) |

As shown in Table 1, the visual change in the layer surface was not inhibited in the binary Ag-alloy layers including Au, Pd, or Ru as in the pure Ag layer. It was supposed that these binary layers were not heat resistant and unstable when exposed to the outdoor temperatures and sun rays. The reflection index of the binary Ag-alloy layers after heating was improved by only 2 to 3 % compared with that of the pure Ag layer after heating. Therefore, no anti-surface diffusion effects due to the addition of Au, Pd, and Ru were confirmed.

### Example 1

Ag-alloy reflecting layers of the present invention were produced from the ternary Ag alloys. Ternary means three elements, i.e., Ag as a main component, a first element selected from the group consisting of Au, Pd, and Ru, and a second element selected from the group consisting of Cu, Ti, Cr, Ta, Mo, Ni, Al, Nb, Au, Pd, and Ru. The second element is different from the first element. The contents of the first element and the second element were 0.1-3.0 wt%.

Firstly, targets of Ag target, the first element, and the second element are installed in a magnetron sputtering apparatus. The three metal elements were simultaneously sputtered to form Ag-alloy layers.

As in the Comparison, quartz substrates, which were 100 mm×100 mm×1.1 t in size, were used as a substrate. The temperature of the substrates during the sputtering process was kept at room temperature (about 25 °C). Using Ar gas as an exclusive sputtering gas in an high vacuum atmosphere where the ultimate vacuum level was 3×10E-6 Pa, the Ag-alloy layer was deposited on the quartz substrate so that the thickness of the layer was 200 nm.

The resultant Ag-alloy layers were kept on a hot plate for about 2 hours. Then the layers were observed. The presence or absence of visual change (to a dull white color) in the layer surface and the time when the visual change occurred were examined. The reflection index of the Ag-alloy layers before and after heating was also examined. The results are shown in Table 2.

**Table 2**

| Material composition (wt%) | Surface state of the layer after heating at 250 °C | The time the visual change occurred | Differences of reflection index before and after heating (wavelength of 800 nm) |
|---|---|---|---|
| **Ag99.8Pd0.1Cu0.1** | no change observed | - | -1.1 % |
| Ag98.4Pd0.1Cu1.5 | no change observed | - | -1.0 % |
| Ag96.9Pd0.1Cu3.0 | no change observed | - | -1.0 % |
| Ag98.4Pd1.5Cu0.1 | no change observed | - | -0.9 % |
| Ag97.0Pd1.5Cu1.5 | no change observed | - | -0.7 % |
| Ag95.5Pd1.5Cu3.0 | no change observed | - | -0.7 % |
| Ag96.9Pd3.0Cu0.1 | no change observed | - | -1.0 % |
| Ag95.5Pd3.0Cu1.5 | no change observed | - | -0.5 % |
| Ag94.0Pd3.0Cu3.0 | no change observed | - | -0.4 % |
| **Ag99.8Pd0.1Ti0.1** | no change observed | - | -1.1 % |
| Ag98.4Pd0.1Ti1.5 | no change observed | - | -1.0 % |
| Ag96.9Pd0.1Ti3.0 | no change observed | - | -1.0 % |
| Ag98.4Pd1.5Ti0.1 | no change observed | - | -0.9 % |
| Ag97.0Pd1.5Ti1.5 | no change observed | - | -0.7 % |
| Ag95.5Pd1.5Ti3.0 | no change observed | - | -0.7 % |
| Ag96.9Pd3.0Ti0.1 | no change observed | - | -1.0 % |
| Ag95.5Pd3.0Ti1.5 | no change observed | - | -0.5 % |
| Ag94.0Pd3.0Ti3.0 | no change observed | - | -0.4 % |
| **Ag99.8Pd0.1Cr0.1** | no change observed | - | -1.1 % |
| Ag98.4Pd0.1Cr1.5 | no change observed | - | -1.0 % |
| Ag96.9Pd0.1Cr3.0 | no change observed | - | -1.0 % |
| Ag98.4Pd1.5Cr0.1 | no change observed | - | -0.9 % |
| Ag97.0Pd1.5Cr1.5 | no change observed | - | -0.7 % |
| Ag95.5Pd1.5Cr3.0 | no change observed | - | -0.7 % |
| Ag96.9Pd3.0Cr0.1 | no change observed | - | -1.0 % |
| Ag95.5Pd3.0Cr1.5 | no change observed | - | -0.5 % |
| Ag94.0Pd3.0Cr3.0 | no change observed | - | -0.4 % |
| **Ag99.8Pd0.1Ta0.1** | no change observed | - | -1.1 % |
| Ag98.4Pd0.1Ta1.5 | no change observed | - | -1.0 % |
| Ag96.9Pd0.1Ta3.0 | no change observed | - | -1.0 % |
| Ag98.6Pd1.5Ta0.1 | no change observed | - | -0.9 % |
| Ag97.0Pd1.5Ta1.5 | no change observed | - | -0.7 % |
| Ag95.5Pd1.5Ta3.0 | no change observed | - | -0.7 % |
| Ag96.9Pd3.0Ta0.1 | no change observed | - | -1.0 % |
| Ag95.5Pd3.0Ta1.5 | no change observed | - | -0.5 % |
| Ag94.0Pd3.0Ta3.0 | no change observed | - | -0.4 % |
| **Ag98.4Pd0.1Ni0.1** | no change observed | - | -1.1 % |
| Ag98.4Pd0.1Ni1.5 | no change observed | - | -1.0 % |
| Ag96.9Pd0.1Ni3.0 | no change observed | - | -1.0 % |
| Ag98.4Pd1.5Ni0.1 | no change observed | - | -0.9 % |
| Ag97.0Pd1.5Ni1.5 | no change observed | - | -0.7 % |
| Ag95.5Pd1.5Ni3.0 | no change observed | - | -0.7 % |
| Ag96.9Pd3.0Ni0.1 | no change observed | - | -1.0 % |
| Ag95.5Pd3.0Ni1.5 | no change observed | - | -0.5 % |
| Ag94.0Pd3.0Ni3.0 | no change observed | - | -0.4 % |
| **Ag99.8Pd0.1Al0.1** | no change observed | - | -1.1 % |
| Ag98.4Pd0.1Al1.5 | no change observed | - | -1.0 % |
| Ag96.9Pd0.1Al3.0 | no change observed | - | -1.0 % |
| Ag98.4Pd1.5Al0.1 | no change observed | - | -0.9 % |
| Ag97.0Pd1.5Al1.5 | no change observed | - | -0.7 % |
| Ag95.5Pd1.5Al3.0 | no change observed | - | -0.7 % |
| Ag96.9Pd3.0Al0.1 | no change observed | - | -1.0 % |
| Ag95.5Pd3.0Al1.5 | no change observed | - | -0.5 % |
| Ag94.0Pd3.0Al3.0 | no change observed | - | -0.4 % |
| **Ag99.8Pd0.1Nb0.1** | no change observed | - | -1.1 % |
| Ag98.4Pd0.1Nb1.5 | no change observed | - | -1.0 % |
| Ag96.9Pd0.1Nb3.0 | no change observed | - | -1.0 % |
| Ag98.4Pd1.5Nb0.1 | no change observed | - | -0.9 % |
| Ag97.0Pd1.5Nb1.5 | no change observed | - | -0.7 % |
| Ag95.5Pd1.5Nb3.0 | no change observed | - | -0.7 % |
| Ag96.9Pd3.0Nb0.1 | no change observed | - | -1.0 % |
| Ag95.5Pd3.0Nb1.5 | no change observed | - | -0.5 % |
| Ag94.0Pd3.0Nb3.0 | no change observed | - | -0.4 % |
| **Ag99.8Pd0.1Mo0.1** | no change observed | - | -1.1 % |
| Ag98.4Pd0.1Mo1.5 | no change observed | - | -1.0 % |
| Ag96.9Pd0.1Mo3.0 | no change observed | - | -1.0 % |
| Ag98.4Pd1.5Mo0.1 | no change observed | - | -0.9 % |
| Ag97.0Pd1.5Mo1.5 | no change observed | - | -0.7 % |
| Ag95.5Pd1.5Mo3.0 | no change observed | - | -0.7 % |
| Ag96.9Pd3.0Mo0.1 | no change observed | - | -1.0 % |
| Ag95.5Pd3.0Mo1.5 | no change observed | - | -0.5 % |
| Ag94.0Pd3.0Mo3.0 | no change observed | - | -0.4 % |
| **Ag99.8Pd0.1Au0.1** | no change observed | - | -1.1 % |
| Ag98.4Pd0.1Au1.5 | no change observed | - | -1.0 % |
| Ag96.9Pd0.1Au3.0 | no change observed | - | -1.0 % |
| Ag98.4Pd1.5Au0.1 | no change observed | - | -0.9 % |
| Ag97.0Pd1.5Au1.5 | no change observed | - | -0.7 % |
| Ag95.5Pd1.5Au3.0 | no change observed | - | -0.7 % |
| Ag96.9Pd3.0Au0.1 | no change observed | - | -1.0 % |
| Ag95.5Pd3.0Au1.5 | no change observed | - | -0.5 % |
| Ag94.0Pd3.0Au3.0 | no change observed | - | -0.4 % |
| **Ag99.8Au0.1Ru0.1** | no change observed | - | -1.0 % |
| Ag98.4Au0.1Ru1.5 | no change observed | - | -0.8 % |
| Ag96.9Au0.1Ru3.0 | no change observed | - | -0.5 % |
| Ag98.4Au1.5Ru0.1 | no change observed | - | -1.0 % |
| Ag97.0Au1.5Ru1.5 | no change observed | - | -0.3 % |
| Ag95.5Au1.5Ru3.0 | no change observed | - | -0.6 % |
| Ag96.9Au3.0Ru0.1 | no change observed | - | -0.8 % |
| Ag95.5Au3.0Ru1.5 | no change observed | - | -0.5 % |
| Ag94.0Au3.0Ru3.0 | no change observed | - | -0.8 % |
| **Ag99.8Pd0.1Ru0.1** | no change observed | - | -1.0 % |
| Ag98.4Pd0.1Ru1.5 | no change observed | - | -0.9 % |
| Ag96.9Pd0.1Ru3.0 | no change observed | - | -1.0 % |
| Ag98.4Pd1.5Ru0.1 | no change observed | - | -0.9 % |
| Ag97.0Pd1.5Ru1.5 | no change observed | - | -0.8 % |
| Ag95.5Pd1.5Ru3.0 | no change observed | - | -0.7 % |
| Ag96.9Pd3.0Ru0.1 | no change observed | - | -1.0 % |
| Ag95.5Pd3.0Ru1.5 | no change observed | - | -0.6 % |
| Ag94.0Pd3.0Ru3.0 | no change observed | - | -0.4 % |

| AgAuXb | | | |
|---|---|---|---|
| **Ag99.8Au0.1Cu0.1** | no change observed | - | -0.9 % |
| Ag98.4Au0.1Cu1.5 | no change observed | - | -0.8 % |
| Ag96.9Au0.1Cu3.0 | no change observed | - | -0.8 % |
| Ag98.4Au1.5Cu0.1 | no change observed | - | -0.7 % |
| Ag97.0Au1.5Cu1.5 | no change observed | - | -0.6 % |
| Ag95.5Au1.5Cu3.0 | no change observed | - | -0.5 % |
| Ag96.9Au3.0Cu0.1 | no change observed | - | -0.8 % |
| Ag95.5Au3.0Cu1.5 | no change observed | - | -0.5 % |
| Ag94.0Au3.0Cu3.0 | no change observed | - | -0.6 % |
| **Ag99.8Au0.1Ti0.1** | no change observed | - | -0.9 % |
| Ag98.4Au0.1Ti1.5 | no change observed | - | -0.6 % |
| Ag96.9Au0.1Ti3.0 | no change observed | - | -0.3 % |
| Ag98.4Au1.5Ti0.1 | no change observed | - | -0.5 % |
| Ag97.0Au1.5Ti1.5 | no change observed | - | -0.8 % |
| Ag95.5Au1.5Ti3.0 | no change observed | - | -0.6 % |
| Ag96.9Au3.0Ti0.1 | no change observed | - | -0.9 % |
| Ag95.5Au3.0Ti1.5 | no change observed | - | -1.1 % |
| Ag94.0Au3.0Ti3.0 | no change observed | - | -1.0 % |
| **Ag99.8Au0.1Cr0.1** | no change observed | - | -0.8 % |
| Ag98.4Au0.1Cr1.5 | no change observed | - | -1.0 % |
| Ag96.9Au0.1Cr3.0 | no change observed | - | -0.6 % |
| Ag98.4Au1.5Cr0.1 | no change observed | - | -0.9 % |
| Ag97.0Au1.5Cr1.5 | no change observed | - | -0.4 % |
| Ag95.5Au1.5Cr3.0 | no change observed | - | -1.1 % |
| Ag96.9Au3.0Cr0.1 | no change observed | - | -0.8 % |
| Ag95.5Au3.0Cr1.5 | no change observed | - | -0.9 % |
| Ag94.0Au3.0Cr3.0 | no change observed | - | -0.7 % |
| **Ag99.8Au0.1Ta0.1** | no change observed | - | -0.5 % |
| Ag98.4Au0.1Ta1.5 | no change observed | - | -0.6 % |
| Ag96.9Au0.1Ta3.0 | no change observed | - | -1.1 % |
| Ag98.6Au1.5Ta0.1 | no change observed | - | -0.4 % |
| Ag97.0Au1.5Ta1.5 | no change observed | - | -0.9 % |
| Ag95.5Au1.5Ta3.0 | no change observed | - | -0.8 % |
| Ag96.9Au3.0Ta0.1 | no change observed | - | -0.5 % |
| Ag95.5Au3.0Ta1.5 | no change observed | - | -1.0 % |
| Ag94.0Au3.0Ta3.0 | no change observed | - | -0.6 % |
| **Ag99.8Au0.1Mo0.1** | no change observed | - | -0.7 % |
| Ag98.4Au0.1Mo1.5 | no change observed | - | -1.1 % |
| Ag96.9Au0.1Mo3.0 | no change observed | - | -0.8 % |
| Ag98.4Au1.5Mo0.1 | no change observed | - | -0.4 % |
| Ag97.0Au1.5Mo1.5 | no change observed | - | -0.8 % |
| Ag95.5Au1.5Mo3.0 | no change observed | - | -0.3 % |
| Ag96.9Au3.0Mo0.1 | no change observed | - | -0.9 % |
| Ag95.5Au3.0Mo1.5 | no change observed | - | -1.1% |
| Ag94.0Au3.0Mo3.0 | no change observed | - | -1.0 % |
| **Ag99.8Au0.1Ni0.1** | no change observed | - | -0.5 % |
| Ag98.4Au0.1Ni1.5 | no change observed | - | -1.1 % |
| Ag96.9Au0.1Ni3.0 | no change observed | - | -0.8 % |
| Ag98.4Au1.5Ni0.1 | no change observed | - | -0.4 % |
| Ag97.0Au1.5Ni1.5 | no change observed | - | -1.0 % |
| Ag95.5Au1.5Ni3.0 | no change observed | - | -0.7 % |
| Ag96.9Au3.0Ni0.1 | no change observed | - | -0.9 % |
| Ag95.5Au3.0Ni1.5 | no change observed | - | -0.6 % |
| Ag94.0Au3.0Ni3.0 | no change observed | - | -0.8 % |
| **Ag99.8Au0.1Al0.1** | no change observed | - | -1.09 % |
| Ag98.4Au0.1Al1.5 | no change observed | - | -1.1 % |
| Ag96.9Au0.1Al3.0 | no change observed | - | -0.7 % |
| Ag98.4Au1.5Al0.1 | no change observed | - | -0.9 % |
| Ag97.0Au1.5Al1.5 | no change observed | - | -0.5 % |
| Ag95.5Au1.5Al3.0 | no change observed | - | -0.4 % |
| Ag96.9Au3.0Al0.1 | no change observed | - | -0.8 % |
| Ag95.5Au3.0Al1.5 | no change observed | - | -1.0 % |
| Ag94.0Au3.0Al3.0 | no change observed | - | -1.1 % |
| **Ag99.8Au0.1Nb0.1** | no change observed | - | -1.1 % |
| Ag98.4Au0.1Nb1.5 | no change observed | - | -1.0 % |
| Ag96.9Au0.1Nb3.0 | no change observed | - | -0.9 % |
| Ag98.4Au1.5Nb0.1 | no change observed | - | -0.8 % |
| Ag97.0Au1.5Nb1.5 | no change observed | - | -0.7 % |
| Ag95.5Au1.5Nb3.0 | no change observed | - | -0.8 % |
| Ag96.9Au3.0Nb0.1 | no change observed | - | -1.0 % |
| Ag95.5Au3.0Nb1.5 | no change observed | - | -0.4 % |
| Ag94.0Au3.0Nb3.0 | no change observed | - | -0.4 % |

| AgRuX | | | |
|---|---|---|---|
| **Ag99.8Ru0.1Cu0.1** | no change observed | - | -0.9 % |
| Ag98.4Ru0.1Cu1.5 | no change observed | - | -0.8 % |
| Ag96.9Ru0.1Cu3.0 | no change observed | - | -0.7 % |
| Ag98.4Ru1.5Cu0.1 | no change observed | - | -0.7 % |
| Ag97.0Ru1.5Cu1.5 | no change observed | - | -0.6 % |
| Ag95.5Ru1.5Cu3.0 | no change observed | - | -0.5 % |
| Ag96.9Ru3.0Cu0.1 | no change observed | - | -0.7 % |
| Ag95.5Ru3.0Cu1.5 | no change observed | - | -0.5 % |
| Ag94.0Ru3.0Cu3.0 | no change observed | - | -0.6 % |
| **Ag99.8Ru0.1Ti0.1** | no change observed | - | -0.9 % |
| Ag98.4Ru0.1Ti1.5 | no change observed | - | -0.6 % |
| Ag96.9Ru0.1Ti3.0 | no change observed | - | -0.4 % |
| Ag98.4Ru1.5Ti0.1 | no change observed | - | -0.5 % |
| Ag97.0Ru1.5Ti1.5 | no change observed | - | -0.8 % |
| Ag95.5Ru1.5Ti3.0 | no change observed | - | -0.5 % |
| Ag96.9Ru3.0Ti0.1 | no change observed | - | -0.9 % |
| Ag95.5Ru3.0Ti1.5 | no change observed | - | -1.1 % |
| Ag94.0Ru3.0Ti3.0 | no change observed | - | -1.0 % |
| **Ag99.8Ru0.1Cr0.1** | no change observed | - | -0.8 % |
| Ag98.4Ru0.1Cr1.5 | no change observed | - | -1.0 % |
| Ag96.9Ru0.1Cr3.0, | no change observed | - | -0.6 % |
| Ag98.4Ru1.5Cr0.1 | no change observed | - | -0.8 % |
| Ag97.0Ru1.5Cr1.5 | no change observed | - | -0.4 % |
| Ag95.5Ru1.5Cr3.0 | no change observed | - | -1.0 % |
| Ag96.9Ru3.0Cr0.1 | no change observed | - | -0.8 % |
| Ag95.5Ru3.0Cr1.5 | no change observed | - | -0.9 % |
| Ag94.0Ru3.0Cr3.0 | no change observed | - | -0.8 % |
| **Ag99.8Ru0.1Ta0.1** | no change observed | - | -0.9 % |
| Ag98.4Ru0.1Ta1.5 | no change observed | - | -0.8 % |
| Ag96.9Ru0.1Ta3.0 | no change observed | - | -0.7 % |
| Ag98.6Ru1.5Ta0.1 | no change observed | - | -0.7 % |
| Ag97.0Ru1.5Ta1.5 | no change observed | - | -0.6 % |
| Ag95.5Ru1.5Ta3.0 | no change observed | - | -0.5 % |
| Ag96.9Ru3.0Ta0.1 | no change observed | - | -0.7 % |
| Ag95.5Ru3.0Ta1.5 | no change observed | - | -0.6 % |
| Ag94.0Ru3.0Ta3.0 | no change observed | - | -0.6 % |
| **Ag99.8Ru0.1Mo0.1** | no change observed | - | -0.8 % |
| Ag98.4Ru0.1Mo1.5 | no change observed | - | -1.0 % |
| Ag96.9Ru0.1Mo3.0 | no change observed | - | -0.6 % |
| Ag98.4Ru1.5Mo0.1 | no change observed | - | -0.7 % |
| Ag97.0Ru1.5Mo1.5 | no change observed | - | -0.4 % |
| Ag95.5Ru1.5Mo3.0 | no change observed | - | -1.1 % |
| Ag96.9Ru3.0Mo0.1 | no change observed | - | -0.8 % |
| Ag95.5Ru3.0Mo1.5 | no change observed | - | -0.7 % |
| Ag94.0Ru3.0Mo3.0 | no change observed | - | -0.6 % |
| **Ag99.8Ru0.1Ni0.1** | no change observed | - | -1.0 % |
| Ag98.4Ru0.1Ni1.5 | no change observed | - | -1.1 % |
| Ag96.9Ru0.1Ni3.0 | no change observed | - | -0.8 % |
| Ag98.4Ru1.5Ni0.1 | no change observed | - | -0.8 % |
| Ag97.0Ru1.5Ni1.5 | no change observed | - | -0.5 % |
| Ag95.5Ru1.5Ni3.0 | no change observed | - | -0.5 % |
| Ag96.9Ru3.0Ni0.1 | no change observed | - | -0.7 % |
| Ag95.5Ru3.0Ni1.5 | no change observed | - | -1.0 % |
| Ag94.0Ru3.0Ni3.0 | no change observed | - | -1.1 % |
| **Ag99.8Ru0.1Al0.1** | no change observed | - | -1.0 % |
| Ag98.4Ru0.1Al1.5 | no change observed | - | -1.1 % |
| Ag96.9Ru0.1Al3.0 | no change observed | - | -0.7 % |
| Ag98.4Ru1.5Al0.1 | no change observed | - | -0.9 % |
| Ag97.0Ru1.5Al1.5 | no change observed | - | -0.5 % |
| Ag95.5Ru1.5Al3.0 | no change observed | - | -0.5 % |
| Ag96.9Ru3.0Al0.1 | no change observed | - | -0.8 % |
| Ag95.5Ru3.0Al1.5 | no change observed | - | -1.0 % |
| Ag94.0Ru3.0Al3.0 | no change observed | - | -1.1 % |
| **Ag99.8Ru0.1Nb0.1** | no change observed | - | -1.1 % |
| Ag98.4Ru0.1Nb1.5 | no change observed | - | -1.0 % |
| Ag96.9Ru0.1Nb3.0 | no change observed | - | -0.8 % |
| Ag98.4Ru1.5Nb0.1 | no change observed | - | -0.8 % |
| Ag97.0Ru1.5Nb1.5 | no change observed | - | -0.7 % |
| Ag95.5Ru1.5Nb3.0 | no change observed | - | -0.7 % |
| Ag96.9Ru3.0Nb0.1 | no change observed | - | -1.0 % |
| Ag95.5Ru3.0Nb1.5 | no change observed | - | -0.5 % |
| Ag94.0Ru3.0Nb3.0 | no change observed | - | -0.4 % |

While the surface change and the accompanying decrease in the reflection index were observed with the Ag-alloy layers in the Comparison, they were not observed with the Ag-alloy layers of any examined composition in Example 1, as shown in Table 2.

Moreover, the quartz substrates, on which various Ag-alloy layers were deposited and which were heated to 250 °C as described , were further kept on a hot plate at 400 °C for two hours. The surface change and the decrease in the reflection index were not observed in the Ag-alloy layers of any examined composition (data not shown).

The Ag-alloy reflecting layers that included Ag and 0.1-3.0 wt% Cu, Ti, Cr, Ta, Mo, Ni, Al, or Nb but did not include Au, Pd, or Ru were produced. As described, the Ag-alloy layer was deposited on the quartz substrate so that the thickness of the layer was 15nm by simultaneous sputtering. The visual change of the layers was observed over time both at 250 °C and 400 °C. All the layers became white and the reflection index was decreased (data not shown).

Taken together, it was revealed that the Ag-alloy layers including Ag as a main component, the first element, and the second element had improved heat resistance and maintained high reflection index.

### Example 2

In this Example, the utility of the ternary Ag-alloy layers as reflectors and reflective wiring electrodes for reflection-type liquid crystal display devices was studied.

The anti-corrosive study on chemical stability was conducted with respect to the conventional metal layers (pure Al, an Al alloy, Ag, binary Ag-alloys) and the ternary Ag-alloy layers of the present invention. A liquid resist was applied to the reflecting layers and the pattern was formed on them. Then the reflecting layers were washed with an alkali solution (5 % KOH aqueous solution) to remove the resist. The surface of the layers was observed. The results are shown in Table 3.

**Table 3**

| Material composition (wt%) | Alkali solution |
|---|---|
| Al | completely reacted |
| A196.0Mg4.0 | completely reacted |
| Al coated with acrylic resin | partially reacted |
| Ag98.0Pd2.0 | many black stains |
| Ag97.0Pd3.0 | moderate black stains |
| **Ag99.8Pd0.1Cu0.1** | no change |
| Ag99.4Pd0.5Cu0.1 | no change |
| Ag98.1Pd0.9Cu1.0 | no change |
| Ag98.9Pd1.0Cu0.1 | no change |
| Ag97.9Pd2.0Cu0.1 | no change |
| Ag96.9Pd3.0Cu0.1 | no change |
| Ag96.5Pd3.0Cu0.5 | no change |
| Ag94.0Pd3.0Cu3.0 | no change |
| **Ag99.8Pd0.1Ti0.1** | no change |
| Ag99.4Pd0.5Ti0.1 | no change |
| Ag98.1Pd0.9Ti1.0 | no change |
| Ag98.9Pd1.0Ti0.1 | no change |
| Ag97.9Pd2.0Ti0.1 | no change |
| Ag96.9Pd3.0Ti0.1 | no change |
| Ag96.5Pd3.0Ti0.5 | no change |
| Ag94.0Pd3.0Ti3.0 | no change |
| **Ag99.8Pd0.1Cr0.1** | no change |
| Ag98.4Pd0.1Cr1.5 | no change |
| Ag96.9Pd0.1Cr3.0 | no change |
| Ag98.4Pd1.5Cr0.1 | no change |
| Ag97.0Pd1.5Cr1.5 | no change |
| Ag95.5Pd1.5Cr3.0 | no change |
| Ag96.9Pd3.0Cr0.1 | no change |
| Ag95.5Pd3.0Cr1.5 | no change |
| Ag94.0Pd3.0Cr3.0 | no change |
| **Ag99.8Pd0.1Ta0.1** | no change |
| Ag98.4Pd0.1Ta1.5 | no change |
| Ag96.9Pd0.1Ta3.0 | no change |
| Ag98.4Pd1.5Ta0.1 | no change |
| Ag97.0Pd1.5Ta1.5 | no change |
| Ag95.5Pd1.5Ta3.0 | no change |
| Ag96.9Pd3.0Ta0.1 | no change |
| Ag95.5Pd3.0Ta1.5 | no change |
| Ag94.0Pd3.0Ta3.0 | no change |
| **Ag99.8Pd0.1Mo0.1** | no change |
| Ag98.4Pd0.1Mo1.5 | no change |
| Ag96.9Pd0.1Mo3.0 | no change |
| Ag98.4Pd1.5Mo0.1 | no change |
| Ag97.0Pd1.5Mo1.5 | no change |
| Ag95.5Pd1.5Mo3.0 | no change |
| Ag96.9Pd3.0Mo0.1 | no change |
| Ag95.5Pd3.0Mo1.5 | no change |
| Ag94.0Pd3.0Mo3.0 | no change |
| Ag98.4Pd0.1Ni0.1 | no change |
| Ag98.4Pd0.1Ni1.5 | no change |
| Ag96.9Pd0.1Ni3.0 | no change |
| Ag98.4Pd1.5Ni0.1 | no change |
| Ag97.0Pd1.5Ni1.5 | no change |
| Ag95.5Pd1.5Ni3.0 | no change |
| Ag96.9Pd3.0Ni0.1 | no change |
| Ag95.5Pd3.0Ni1.5 | no change |
| Ag94.0Pd3.0Ni3.0 | no change |
| **Ag99.8Pd0.1Al0.1** | no change |
| Ag98.4Pd0.1Al1.5 | no change |
| Ag96.9Pd0.1Al3.0 | no change |
| Ag98.4Pd1.5Al0.1 | no change |
| Ag97.0Pd1.5Al1.5 | no change |
| Ag95.5Pd1.5Al3.0 | no change |
| Ag96.9Pd3.0Al0.1 | no change |
| Ag95.5Pd3.0Al1.5 | no change |
| Ag94.0Pd3.0Al3.0 | no change |
| **Ag99.8Pd0.1Nb0.1** | no change |
| Ag98.4Pd0.1Nb1.5 | no change |
| Ag96.9Pd0.1Nb3.0 | no change |
| Ag98.4Pd1.5Nb0.1 | no change |
| Ag97.0Pd1.5Nb1.5 | no change |
| Ag95.5Pd1.5Nb3.0 | no change |
| Ag96.9Pd3.0Nb0.1 | no change |
| Ag95.5Pd3.0Nb1.5 | no change |
| Ag94.0Pd3.0Nb3.0 | no change |
| **Ag99.8Pd0.1Au0.1** | no change |
| Ag98.4Pd0.1Au1.5 | no change |
| Ag96.9Pd0.1Au3.0 | no change |
| Ag98.4Pd1.5Au0.1 | no change |
| Ag97.0Pd1.5Au1.5 | no change |
| Ag95.5Pd1.5Au3.0 | no change |
| Ag96.9Pd3.0Au0.1 | no change |
| Ag95.5Pd3.0Au1.5 | no change |
| Ag94.0Pd3.0Au3.0 | no change |
| **Ag99.8Ru0.1Au0.1** | no change |
| Ag98.4Ru0.1Au1.5 | no change |
| Ag96.9Ru0.1Au3.0 | no change |
| Ag98.4Ru1.5Au0.1 | no change |
| Ag97.0Ru1.5Au1.5 | no change |
| Ag95.5Ru1.5Au3.0 | no change |
| Ag96.9Ru3.0Au0.1 | no change |
| Ag95.5Ru3.0Au1.5 | no change |
| Ag94.0Ru3.0Au3.0 | no change |
| **Ag99.8Pd0.1Ru0.1** | no change |
| Ag98.4Pd0.1Ru1.5 | no change |
| Ag96.9Pd0.1Ru3.0 | no change |
| Ag98.4Pd1.5Ru0.1 | no change |
| Ag97.0Pd1.5Ru1.5 | no change |
| Ag95.5Pd1.5Ru3.0 | no change |
| Ag96.9Pd3.0Ru0.1 | no change |
| Ag95.5Pd3.0Ru1.5 | no change |
| Ag94.0Pd3.0Ru3.0 | no change |

| AgAuX | |
|---|---|
| Ag98.0Au2.0 | many black stains |
| Ag97.0Au3.0 | moderate black stains |
| **Ag99.8Au0.1Cu0.1** | no change |
| Ag99.4Au0.5Cu0.1 | no change |
| Ag98.1Au0.9Cu1.0 | no change |
| Ag98.9Au1.0Cu0.1 | no change |
| Ag97.9Au2.0Cu0.1 | no change |
| Ag96.9Au3.0Cu0.1 | no change |
| Ag96.5Au3.0Cu0.5 | no change |
| Ag94.0Au3.0Cu3.0 | no change |
| **Ag99.8Au0.1Ti0.1** | no change |
| Ag99.4Au0.5Ti0.1 | no change |
| Ag98.1Au0.9Ti1.0 | no change |
| Ag98.9Au1.0Ti0.1 | no change |
| Ag97.9Au2.0Ti0.1 | no change |
| Ag96.9Au3.0Ti0.1 | no change |
| Ag96.5Au3.0Ti0.5 | no change |
| Ag94.0Au3.0Ti3.0 | no change |
| **Ag99.8Au0.1Cr0.1** | no change |
| Ag98.4Au0.1Cr1.5 | no change |
| Ag96.9Au0.1Cr3.0 | no change |
| Ag98.4Au1.5Cr0.1 | no change |
| Ag97.0Au1.5Cr1.5 | no change |
| Ag95.5Au1.5Cr3.0 | no change |
| Ag96.9Au3.0Cr0.1 | no change |
| Ag95.5Au3.0Cr1.5 | no change |
| Ag94.0Au3.0Cr3.0 | no change |
| **Ag99.8Au0.1Ta0.1** | no change |
| Ag98.4Au0.1Ta1.5 | no change |
| Ag96.9Au0.1Ta3.0 | no change |
| Ag98.4Au1.5Ta0.1 | no change |
| Ag97.0Au1.5Ta1.5 | no change |
| Ag95.5Au1.5Ta3.0 | no change |
| Ag96.9Au3.0Ta0.1 | no change |
| Ag95.5Au3.0Ta1.5 | no change |
| Ag94.0Au3.0Ta3.0 | no change |
| **Ag99.8Au0.1Mo0.1** | no change |
| Ag98.4Au0.1Mo1.5 | no change |
| Ag96.9Au0.1Mo3.0 | no change |
| Ag98.4Au1.5Mo0.1 | no change |
| Ag97.0Au1.5Mo1.5 | no change |
| Ag95.5Au1.5Mo3.0 | no change |
| Ag96.9Au3.0Mo0.1 | no change |
| Ag95.5Au3.0Mo1.5 | no change |
| Ag94.0Au3.0Mo3.0 | no change |
| **Ag99.8Au0.1Ni0.1** | no change |
| Ag98.4Au0.1Ni1.5 | no change |
| Ag96.9Au0.1Ni3.0 | no change |
| Ag98.4Au1.5Ni0.1 | no change |
| Ag97.0Au1.5Ni1.5 | no change |
| Ag95.5Au1.5Ni3.0 | no change |
| Ag96.9Au3.0Ni0.1 | no change |
| Ag95.5Au3.0Ni1.5 | no change |
| Ag94.0Au3.0Ni3.0 | no change |
| **Ag99.8Au0.1Al0.1** | no change |
| Ag98.4Au0.1Al1.5 | no change |
| Ag96.9Au0.1Al3.0 | no change |
| Ag98.4Au1.5Al0.1 | no change |
| Ag97.0Au1.5Al1.5 | no change |
| Ag95.5Au1.5Al3.0 | no change |
| Ag96.9Au3.0Al0.1 | no change |
| Ag95.5Au3.0Al1.5 | no change |
| Ag94.0Au3.0Al3.0 | no change |
| **Ag99.8Au0.1Nb0.1** | no change |
| Ag98.4Au0.1Nb1.5 | no change |
| Ag96.9Au0.1Nb3.0 | no change |
| Ag98.4Au1.5Nb0.1 | no change |
| Ag97.0Au1.5Nb1.5 | no change |
| Ag95.5Au1.5Nb3.0 | no change |
| Ag96.9Au3.0Nb0.1 | no change |
| Ag95.5Au3.0Nb1.5 | no change |
| Ag94.0Au3.0Nb3.0 | no change |

| AgRuX | |
|---|---|
| Ag98.0Ru2.0 | many black stains |
| Ag97.0Ru3.0 | moderate black stains |
| **Ag99.8Ru0.1Cu0.1** | no change |
| Ag99.4Ru0.5Cu0.1 | no change |
| Ag98.1Ru0.9Cu1.0 | no change |
| Ag98.9Ru1.0Cu0.1 | no change |
| Ag97.9Ru2.0Cu0.1 | no change |
| Ag96.9Ru3.0Cu0.1 | no change |
| Ag96.5Ru3.0Cu0.5 | no change |
| Ag94.0Ru3.0Cu3.0 | no change |
| **Ag99.8Ru0.1Ti0.1** | no change |
| Ag99.4Ru0.5Ti0.1 | no change |
| Ag98.1Ru0.9Ti1.0 | no change |
| Ag98.9Ru1.0Ti0.1 | no change |
| Ag97.9Ru2.0Ti0.1 | no change |
| Ag96.9Ru3.0Ti0.1 | no change |
| Ag96.5Ru3.0Ti0.5 | no change |
| Ag94.0Ru3.0Ti3.0 | no change |
| **Ag99.8Ru0.1Cr0.1** | no change |
| Ag98.4Ru0.1Cr1.5 | no change |
| Ag96.9Ru0.1Cr3.0 | no change |
| Ag98.4Ru1.5Cr0.1 | no change |
| Ag97.0Ru1.5Cr1.5 | no change |
| Ag95.5Ru1.5Cr3.0 | no change |
| Ag96.9Ru3.0Cr0.1 | no change |
| Ag95.5Ru3.0Cr1.5 | no change |
| Ag94.0Ru3.0Cr3.0 | no change |
| **Ag99.8Ru0.1Ta0.1** | no change |
| Ag98.4Ru0.1Ta1.5 | no change |
| Ag96.9Ru0.1Ta3.0 | no change |
| Ag98.4Ru1.5Ta0.1 | no change |
| Ag97.0Ru1.5Ta1.5 | no change |
| Ag95.5Ru1.5Ta3.0 | no change |
| Ag96.9Ru3.0Ta0.1 | no change |
| Ag95.5Ru3.0Ta1.5 | no change |
| Ag94.0Ru3.0Ta3.0 | no change |
| **Ag99.8Ru0.1Mo0.1** | no change |
| Ag98.4Ru0.1Mo1.5 | no change |
| Ag96.9Ru0.1Mo3.0 | no change |
| Ag98.4Ru1.5Mo0.1 | no change |
| Ag97.0Ru1.5Mo1.5 | no change |
| Ag95.5Ru1.5Mo3.0 | no change |
| Ag96.9Ru3.0Mo0.1 | no change |
| Ag95.5Ru3.0Mo1.5 | no change |
| Ag94.0Ru3.0Mo3.0 | no change |
| **Ag99.8Ru0.1Ni0.1** | no change |
| Ag98.4Ru0.1Ni1.5 | no change |
| Ag96.9Ru0.1Ni3.0 | no change |
| Ag98.4Ru1.5Ni0.1 | no change |
| Ag97.0Ru1.5Ni1.5 | no change |
| Ag95.5Ru1.5Ni3.0 | no change |
| Ag96.9Ru3.0Ni0.1 | no change |
| Ag95.5Ru3.0Ni1.5 | no change |
| Ag94.0Ru3.0Ni3.0 | no change |
| **Ag99.8Ru0.1Al0.1** | no change |
| Ag98.4Ru0.1Al1.5 | no change |
| Ag96.9Ru0.1Al3.0 | no change |
| Ag98.4Ru1.5Al0.1 | no change |
| Ag97.0Ru1.5Al1.5 | no change |
| Ag95.5Ru1.5Al3.0 | no change |
| Ag96.9Ru3.0Al0.1 | no change |
| Ag95.5Ru3.0Al1.5 | no change |
| Ag94.0Ru3.0Al3.0 | no change |
| **Ag99.8Ru0.1Nb0.1** | no change |
| Ag98.4Ru0.1Nb1.5 | no change |
| Ag96.9Ru0.1Nb3.0 | no change |
| Ag98.4Ru1.5Nb0.1 | no change |
| Ag97.0Ru1.5Nb1.5 | no change |
| Ag95.5Ru1.5Nb3.0 | no change |
| Ag96.9Ru3.0Nb0.1 | no change |
| Ag95.5Ru3.0Nb1.5 | no change |
| Ag94.0Ru3.0Nb3.0 | no change |

As shown in Table 3, the decrease in the reflection index was not observed with the Ag-alloy layers of the present invention of any composition. Thus, the ternary Ag-alloy layers are more stable to alkali solution than conventional layers, and the quality of the inventive layers was superior to the conventional layers.

Next, the reflection index at 500nm and 800nm was measured in both layers. The range from 500 to 800 nm (565 nm) is the standard optical wavelength range for liquid crystal display devices. As shown in Table 4, the reflection index of the ternary Ag-alloy layers of the present invention was improved by 0.5-3.0 % compared with Al, the Al alloy, Ag, the binary Ag-alloy layers.

**Table 4**

| Material composition (wt%) | 500mm wavelength | 800mm wavelength |
|---|---|---|
| | reflection index (%) | reflection index (%) |
| Al | 87.2 | 84.5 |
| A196.0Mg4.0 | 83.1 | 82.3 |
| Al coated with acrylic resin | 79.4 | 76.6 |
| Ag | 98.2 | 98.8 |
| Ag98.0Pd2.0 | 91.3 | 94.5 |
| Ag97.0Pd3.0 | 86.9 | 92.1 |
| **Ag99.8Pd0.1Cu0.1** | 98.0 | 98.6 |
| Ag99.4Pd0.5Cu0.1 | 98.0 | 98.4 |
| Ag98.1Pd0.9Cu1.0 | 97.8 | 98.0 |
| Ag98.9Pd1.0Cu0.1 | 94.4 | 97.6 |
| Ag97.9Pd2.0Cu0.1 | 91.4 | 94.6 |
| Ag96.9Pd3.0Cu0.1 | 87.5 | 93.4 |
| Ag96.5Pd3.0Cu0.5 | 87.3 | 92.7 |
| Ag94.0Pd3.0Cu3.0 | 84.7 | 91.1 |
| **Ag99.8Pd0.1Ti0.1** | 98.0 | 98.6 |
| Ag99.4Pd0.5Ti0.1 | 98.0 | 98.4 |
| Ag98.1Pd0.9Ti1.0 | 97.6 | 97.9 |
| Ag98.9Pd1.0Ti0.1 | 94.4 | 97.6 |
| Ag97.9Pd2.0Ti0.1 | 91.4 | 94.6 |
| Ag96.9Pd3.0Ti0.1 | 87.5 | 93.4 |
| Ag96.5Pd3.0Ti0.5 | 87.0 | 92.5 |
| Ag94.0Pd3.0Ti3.0 | 87.0 | 90.7 |
| **Ag99.8Pd0.1Cr0.1** | 94.6 | 94.7 |
| Ag98.4Pd0.1Cr1.5 | 91.7 | 91.7 |
| Ag96.9Pd0.1Cr3.0 | 89.3 | 89.7 |
| Ag98.4Pd1.5Cr0.1 | 91.5 | 91.7 |
| Ag97.0Pd1.5Cr1.5 | 86.8 | 86.8 |
| Ag95.5Pd1.5Cr3.0 | 84.2 | 84.2 |
| Ag96.9Pd3.0Cr0.1 | 85.6 | 85.6 |
| Ag95.5Pd3.0Cr1.5 | 83.5 | 83.5 |
| Ag94.0Pd3.0Cr3.0 | 82.7 | 82.7 |
| **Ag99.8Pd0.1Ta0.1** | 94.6 | 94.7 |
| Ag98.4Pd0.1Ta1.5 | 91.7 | 91.7 |
| Ag96.9Pd0.1Ta3.0 | 89.3 | 89.7 |
| Ag98.4Pd1.5Ta0.1 | 91.5 | 91.7 |
| Ag97.0Pd1.5Ta1.5 | 86.8 | 86.8 |
| Ag95.5Pd1.5Ta3.0 | 84.2 | 84.2 |
| Ag96.9Pd3.0Ta0.1 | 85.6 | 85.6 |
| Ag95.5Pd3.0Ta1.5 | 83.5 | 83.5 |
| Ag94.0Pd3.0Ta3.0 | 82.7 | 82.7 |
| **Ag99.8Pd0.1Mo0.1** | 94.6 | 94.7 |
| Ag98.4Pd0.1Mo1.5 | 91.7 | 91.7 |
| Ag96.9Pd0.1Mo3.0 | 89.3 | 89.7 |
| Ag98.4Pd1.5Mo0.1 | 91.5 | 91.7 |
| Ag97.0Pd1.5Mo1.5 | 86.8 | 86.8 |
| Ag95.5Pd1.5Mo3.0 | 84.2 | 84.2 |
| Ag96.9Pd3.0Mo0.1 | 85.6 | 85.6 |
| Ag95.5Pd3.0Mo1.5 | 83.5 | 83.5 |
| Ag94.0Pd3.0Mo3.0 | 82.7 | 82.7 |
| **Ag98.4Pd0.1Ni0.1** | 96.1 | 96.1 |
| Ag98.4Pd0.1Ni1.5 | 95.6 | 95.6 |
| Ag96.9Pd0.1Ni3.0 | 94.3 | 94.8 |
| Ag98.4Pd1.5Ni0.1 | 92.7 | 93.7 |
| Ag97.0Pd1.5Ni1.5 | 91.2 | 92.1 |
| Ag95.5Pd1.5Ni3.0 | 88.9 | 90.7 |
| Ag96.9Pd3.0Ni0.1 | 86.1 | 88.9 |
| Ag95.5Pd3.0Ni1.5 | 84.6 | 86.2 |
| Ag94.0Pd3.0Ni3.0 | 82.7 | 84.6 |
| **Ag99.8Pd0.1Al0.1** | 98.1 | 84.76 |
| Ag98.4Pd0.1Al1.5 | 98.1 | 98.4 |
| Ag96.9Pd0.1Al3.0 | 97.6 | 98.1 |
| Ag98.4Pd1.5Al0.1 | 96.5 | 97.6 |
| Ag97.0Pd1.5Al1.5 | 95.3 | 96.8 |
| Ag95.5Pd1.5Al3.0 | 93.5 | 95.9 |
| Ag96.9Pd3.0Al0.1 | 91 | 94.6 |
| Ag95.5Pd3.0Al1.5 | 88.6 | 93 |
| Ag94.0Pd3.0Al3.0 | 86.1 | 91.7 |
| **Ag99.8Pd0.1Nb0.1** | 95 | 95.3 |
| Ag98.4Pd0.1Nb1.5 | 94.4 | 94.8 |
| Ag96.9Pd0.1Nb3.0 | 93.8 | 94.2 |
| Ag98.4Pd1.5Nb0.1 | 92.4 | 92.7 |
| Ag97.0Pd1.5Nb1.5 | 90.8 | 91.4 |
| Ag95.5Pd1.5Nb3.0 | 89.5 | 90.2 |
| Ag96.9Pd3.0Nb0.1 | 86.7 | 87.9 |
| Ag95.5Pd3.0Nb1.5 | 84.6 | 85.9 |
| Ag94.0Pd3.0Nb3.0 | 82.7 | 84.7 |
| **Ag99.8Pd0.1Au0.1** | 96.7 | 97.0 |
| Ag98.4Pd0.1Au1.5 | 96.4 | 96.8 |
| Ag96.9Pd0.1Au3.0 | 95.8 | 96.1 |
| Ag98.4Pd1.5Au0.1 | 92.3 | 94.5 |
| Ag97.0Pd1.5Au1.5 | 92.1 | 94.3 |
| Ag95.5Pd1.5Au3.0 | 92.4 | 95.0 |
| Ag96.9Pd3.0Au0.1 | 85.1 | 85.3 |
| Ag95.5Pd3.0Au1.5 | 83.2 | 83.3 |
| Ag94.0Pd3.0Au3.0 | 82.0 | 82.8 |
| **Ag99.8Ru0.1Au0.1** | 96.6 | 97.1 |
| Ag98.4Ru0.1Au1.5 | 96.3 | 96.7 |
| Ag96.9Ru0.1Au3.0 | 95.8 | 96.1 |
| Ag98.4Ru1.5Au0.1 | 92.4 | 94.4 |
| Ag97.0Ru1.5Au1.5 | 92.1 | 94.3 |
| Ag95.5Ru1.5Au3.0 | 92.4 | 95.0 |
| Ag96.9Ru3.0Au0.1 | 85.1 | 85.3 |
| Ag95.5Ru3.0Au1.5 | 83.2 | 83.2 |
| Ag94.0Ru3.0Au3.0 | 82.0 | 82.8 |
| **Ag99.8Pd0.1Ru0.1** | 96.7 | 97.1 |
| Ag98.4Pd0.1Ru1.5 | 96.4 | 96.6 |
| Ag96.9Pd0.1Ru3.0 | 95.8 | 96.5 |
| Ag98.4Pd1.5Ru0.1 | 92.3 | 93.5 |
| Ag97.0Pd1.5Ru1.5 | 92.0 | 94.3 |
| Ag95.5Pd1.5Ru3.0 | 92.3 | 95.0 |
| Ag96.9Pd3.0Ru0.1 | 85.0 | 85.3 |
| Ag95.5Pd3.0Ru1.5 | 83.3 | 83.3 |
| Ag94.0Pd3.0Ru3.0 | 82.1 | 82.5 |

| AgAuX | | |
|---|---|---|
| Ag98.0Au2.0 | 87.3 | 92.2 |
| Ag97.0Au3.0 | 86.1 | 91.3 |
| **Ag99.8Au0.1Cu0.1** | 98.2 | 98.8 |
| Ag99.4Au0.5Cu0.1 | 98.1 | 98.5 |
| Ag98.1Au0.9Cu1.0 | 97.6 | 98.0 |
| Ag98.9Au1.0Cu0.1 | 96.5 | 97.6 |
| Ag97.9Au2.0Cu0.1 | 95.2 | 96.9 |
| Ag96.9Au3.0Cu0.1 | 93.7 | 96.1 |
| Ag96.5Au3.0Cu0.5 | 91.1 | 94.7 |
| Ag94.0Au3.0Cu3.0 | 85.6 | 91.8 |
| **Ag99.8Au0.1Ti0.1** | 98.0 | 98.5 |
| Ag99.4Au0.5Ti0.1 | 97.8 | 98.2 |
| Ag98.1Au0.9Ti1.0 | 97.3 | 97.9 |
| Ag98.9Au1.0Ti0.1 | 96.6 | 97.5 |
| Ag97.9Au2.0Ti0.1 | 95.5 | 97.1 |
| Ag96.9Au3.0Ti0.1 | 93.9 | 96.3 |
| Ag96.5Au3.0Ti0.5 | 92.3 | 95.2 |
| Ag94.0Au3.0Ti3.0 | 86.4 | 90.8 |
| **Ag99.8Au0.1Cr0.1** | 94.6 | 94.7 |
| Ag98.4Au0.1Cr1.5 | 93.4 | 93.6 |
| Ag96.9Au0.1Cr3.0 | 91.9 | 92.4 |
| Ag98.4Au1.5Cr0.1 | 90.2 | 90.7 |
| Ag97.0Au1.5Cr1.5 | 88.5 | 89.3 |
| Ag95.5Au1.5Cr3.0 | 86.1 | 86.6 |
| Ag96.9Au3.0Cr0.1 | 84.9 | 85.2 |
| Ag95.5Au3.0Cr1.5 | 83.4 | 83.8 |
| Ag94.0Au3.0Cr3.0 | 82.6 | 82.6 |
| **Ag99.8Au0.1Ta0.1** | 95.1 | 95.3 |
| Ag98.4Au0.1Ta1.5 | 94.6 | 95.0 |
| Ag96.9Au0.1Ta3.0 | 93.4 | 94.1 |
| Ag98.6Au1.5Ta0.1 | 91.8 | 92.5 |
| Ag97.0Au1.5Ta1.5 | 90.4 | 91.2 |
| Ag95.5Au1.5Ta3.0 | 88.7 | 89.9 |
| Ag96.9Au3.0Ta0.1 | 85.9 | 87.6 |
| Ag95.5Au3.0Ta1.5 | 84.5 | 85.9 |
| Ag94.0Au3.0Ta3.0 | 82.8 | 84.2 |
| **Ag99.8Au0.1Mo0.1** | 94.8 | 95.1 |
| Ag98.4Au0.1Mo1.5 | 94.2 | 94.7 |
| Ag96.9Au0.1Mo3.0 | 93.5 | 94.0 |
| Ag98.4Au1.5Mo0.1 | 92.3 | 92.9 |
| Ag97.0Au1.5Mo1.5 | 90.6 | 91.5 |
| Ag95.5Au1.5Mo3.0 | 89.7 | 90.3 |
| Ag96.9Au3.0Mo0.1 | 86.8 | 88.6 |
| Ag95.5Au3.0Mo1.5 | 84.6 | 86.4 |
| Ag94.0Au3.0Mo3.0 | 82.7 | 84.5 |
| **Ag99.8Au0.1Ni0.1** | 95.7 | 95.9 |
| Ag98.4Au0.1Ni1.5 | 95.2 | 95.4 |
| Ag96.9Au0.1Ni3.0 | 93.9 | 94.6 |
| Ag98.4Au1.5Ni0.1 | 92.3 | 93.5 |
| Ag97.0Au1.5Ni1.5 | 90.8 | 91.9 |
| Ag95.5Au1.5Ni3.0 | 88.7 | 90.6 |
| Ag96.9Au3.0Ni0.1 | 85.9 | 88.8 |
| Ag95.5Au3.0Ni1.5 | 84.4 | 86.1 |
| Ag94.0Au3.0Ni3.0 | 82.6 | 84.5 |
| **Ag99.8Au0.1Al0.1** | 98.0 | 98.6 |
| Ag98.4Au0.1Al1.5 | 97.9 | 98.3 |
| Ag96.9Au0.1Al3.0 | 97.5 | 98.0 |
| Ag98.4Au1.5Al0.1 | 96.4 | 97.5 |
| Ag97.0Au1.5Al1.5 | 95.2 | 96.7 |
| Ag95.5Au1.5Al3.0 | 93.4 | 95.8 |
| Ag96.9Au3.0Al0.1 | 90.8 | 94.4 |
| Ag95.5Au3.0Al1.5 | 88.4 | 92.8 |
| Ag94.0Au3.0Al3.0 | 85.9 | 91.5 |
| **Ag99.8Au0.1Nb0.1** | 94.8 | 95.1 |
| Ag98.4Au0.1Nb1.5 | 94.3 | 94.7 |
| Ag96.9Au0.1Nb3.0 | 93.5 | 94.1 |
| Ag98.4Au1.5Nb0.1 | 92.1 | 92.6 |
| Ag97.0Au1.5Nb1.5 | 90.5 | 91.3 |
| Ag95.5Au1.5Nb3.0 | 89.2 | 90.1 |
| Ag96.9Au3.0Nb0.1 | 86.4 | 87.8 |
| Ag95.5Au3.0Nb1.5 | 84.3 | 85.7 |
| Ag94.0Au3.0Nb3.0 | 82.4 | 84.5 |

| AgRuX | | |
|---|---|---|
| Ag98.0Ru2.0 | 86.3 | 91.2 |
| Ag97.0Ru3.0 | 86.0 | 91.3 |
| **Ag99.8Ru0.1Cu0.1** | 98.1 | 98.8 |
| Ag99.4Ru0.5Cu0.1 | 98.0 | 98.6 |
| Ag98.1Ru0.9Cu1.0 | 97.6 | 98.1 |
| Ag98.9Ru1.0Cu0.1 | 96.5 | 97.5 |
| Ag97.9Ru2.0Cu0.1 | 95.2 | 96.8 |
| Ag96.9Ru3.0Cu0.1 | 93.7 | 96.0 |
| Ag96.5Ru3.0Cu0.5 | 91.1 | 94.7 |
| Ag94.0Ru3.0Cu3.0 | 85.6 | 91.7 |
| **Ag99.8Ru0.1Ti0.1** | 98.0 | 98.4 |
| Ag99.4Ru0.5Ti0.1 | 97.7 | 98.2 |
| Ag98.1Ru0.9Ti1.0 | 97.2 | 97.9 |
| Ag98.9Ru1.0Ti0.1 | 96.5 | 97.5 |
| Ag97.9Ru2.0Ti0.1 | 95.4 | 97.1 |
| Ag96.9Ru3.0Ti0.1 | 93.8 | 96.3 |
| Ag96.5Ru3.0Ti0.5 | 92.1 | 95.2 |
| Ag94.0Ru3.0Ti3.0 | 86.4 | 90.8 |
| **Ag99.8Ru0.1Cr0.1** | 94.6 | 94.7 |
| Ag98.4Ru0.1Cr1.5 | 93.4 | 92.6 |
| Ag96.9Ru0.1Cr3.0 | 91.9 | 92.4 |
| Ag98.4Ru1.5Cr0.1 | 90.5 | 91.7 |
| Ag97.0Ru1.5Cr1.5 | 88.2 | 88.3 |
| Ag95.5Ru1.5Cr3.0 | 86.1 | 86.6 |
| Ag96.9Ru3.0Cr0.1 | 84.8 | 84.2 |
| Ag95.5Ru3.0Cr1.5 | 83.3 | 83.8 |
| Ag94.0Ru3.0Cr3.0 | 82.4 | 82.6 |
| **Ag99.8Ru0.1Ta0.1** | 95.0 | 95.3 |
| Ag98.4Ru0.1Ta1.5 | 94.6 | 95.0 |
| Ag96.9Ru0.1Ta3.0 | 93.4 | 94.1 |
| Ag98.4Ru1.5Ta0.1 | 91.8 | 92.5 |
| Ag97.0Ru1.5Ta1.5 | 90.4 | 91.2 |
| Ag95.5Ru1.5Ta3.0 | 88.7 | 89.9 |
| Ag96.9Ru3.0Ta0.1 | 85.9 | 87.6 |
| Ag95.5Ru3.0Ta1.5 | 84.5 | 85.9 |
| Ag94.0Ru3.0Ta3.0 | 82.6 | 84.2 |
| **Ag99.8Ru0.1Mo0.1** | 94.7 | 95.1 |
| Ag98.4Ru0.1Mo1.5 | 94.1 | 94.7 |
| Ag96.9Ru0.1Mo3.0 | 93.3 | 94.0 |
| Ag98.4Ru1.5Mo0.1 | 92.2 | 92.9 |
| Ag97.0Ru1.5Mo1.5 | 90.5 | 91.5 |
| Ag95.5Ru1.5Mo3.0 | 89.9 | 91.3 |
| Ag96.9Ru3.0Mo0.1 | 86.8 | 88.6 |
| Ag95.5Ru3.0Mo1.5 | 84.8 | 86.3 |
| Ag94.0Ru3.0Mo3.0 | 82.6 | 84.5 |
| **Ag99.8Ru0.1Ni0.1** | 96.7 | 97.2 |
| Ag98.4Ru0.1Ni1.5 | 96.5 | 96.9 |
| Ag96.9Ru0.1Ni3.0 | 96.1 | 96.3 |
| Ag98.4Ru1.5Ni0.1 | 95.3 | 95.8 |
| Ag97.0Ru1.5Ni1.5 | 93.7 | 94.7 |
| Ag95.5Ru1.5Ni3.0 | 91.2 | 93.3 |
| Ag96.9Ru3.0Ni0.1 | 88.4 | 91.7 |
| Ag95.5Ru3.0Ni1.5 | 85.0 | 87.2 |
| Ag94.0Ru3.0Ni3.0 | 83.5 | 85.6 |
| **Ag99.8Ru0.1Al0.1** | 98.0 | 98.4 |
| Ag98.4Ru0.1Al1.5 | 97.9 | 98.2 |
| Ag96.9Ru0.1Al3.0 | 97.5 | 98.1 |
| Ag98.4Ru1.5Al0.1 | 96.4 | 97.5 |
| Ag97.0Ru1.5Al1.5 | 95.2 | 96.5 |
| Ag95.5Ru1.5Al3.0 | 93.4 | 95.8 |
| Ag96.9Ru3.0Al0.1 | 90.8 | 94.4 |
| Ag95.5Ru3.0Al1.5 | 88.4 | 92.7 |
| Ag94.0Ru3.0Al3.0 | 85.4 | 91.5 |
| **Ag99.8Ru0.1Nb0.1** | 94.7 | 95.2 |
| Ag98.4Ru0.1Nb1.5 | 94.3 | 94.7 |
| Ag96.9Ru0.1Nb3.0 | 93.4 | 94.1 |
| Ag98.4Ru1.5Nb0.1 | 92.1 | 92.5 |
| Ag97.0Ru1.5Nb1.5 | 90.2 | 91.3 |
| Ag95.5Ru1.5Nb3.0 | 88.1 | 90.0 |
| Ag96.9Ru3.0Nb0.1 | 85.2 | 87.8 |
| Ag95.5Ru3.0Nb1.5 | 84.1 | 85.7 |
| Ag94.0Ru3.0Nb3.0 | 82.4 | 84.5 |

Thus, it was revealed that the Ag-alloy layers of the present invention were very useful as reflectors or reflective wiring electrodes for reflection-type liquid crystal display devices.

### Example 3

In this Example, the utility of the ternary Ag-alloy layer as infrared-ray or heat-ray reflecting layers for building glass was studied. Further, the adaptability of the ternary layer to a resin substrate under high temperature and high humidity conditions was studied.

The tests on weather resistance under high temperature and high humidity conditions were carried out with regard to the ternary Ag-alloy layers, compared with binary Ag-alloy layers including Ag-Pd alloy layers, Ag-Au alloy layers and Ag-Ru alloy layers. The ternary Ag-alloy layers were deposited on all kinds of substrates (substrates made of non-alkali glass, low-alkali glass, borosilicate glass, and quartz glass) by ternary simultaneous sputtering. The change of the Ag-alloy layers was examined over time in an atmosphere of 90 °C and 90 % humidity.

The tests for weather resistance were carried out with regard to monolayers of the ternary reflecting layers and laminates of the base film and the ternary reflecting layer. For the monolayers, the ternary reflecting layer was directly deposited on the substrate. For the laminates, the base film such ITO, ZnO₂, ZnO₂-Al₂O₃ composite oxide and SiO₂ was deposited on the substrate and then the Ag-alloy reflecting layer was deposited on the base film. The difference between the monolayers and the laminates was also evaluated.

The results showed that both the monolayers of the ternary reflecting layer and the laminates of the base film and the Ag-alloy reflecting layer have higher weather resistance than the monolayers of the binary reflecting layers. The ternary reflecting layers maintained heat resistance, reflection index, and weather resistance, independent of the base film. It was confirmed that the ternary reflecting layers of the present invention were more useful than the conventional binary reflecting layer as infrared-ray or heat-ray reflecting layers for building glass such as windowpanes (data not shown).

Widely used conventional reflecting layers made of Al, an Al alloy, Ag, an Ag-Pd alloy react with a resin substrate at the adhesive interface when kept under high temperature and high humidity conditions. The following tests were conducted on the chemical stability of the reflecting layers of the present invention against the resin substrates under high temperature and high humidity conditions.

To confirm the chemical stability of the ternary reflecting layers of the present invention, the reflecting layers were deposited at a thickness of 15nm on the resin layer of PMMA, PET, PC, silicone, and the like by ternary simultaneous sputtering. The layers were kept under high temperature and high humidity conditions for 24 hours. The change in appearance and reflection characteristics over time was examined.

**Table 5**

| Material composition (wt%) | Results of high temperature and high humidity tests | |
|---|---|---|
| | Change in chemical characteristics (decrease in reflection index) | Visual change to a dull white color, detachment from the substrate |
| Ag98.0Pd2.0 | many black stains | detachment occured |
| Ag97.0Pd3.0 | moderate black stains | detachment occured |
| **Ag99.8Pd0.1Cu0.1** | no change | less color change |
| Ag99.4Pd0.5Cu0.1 | no change | no change |
| Ag98.1Pd0.9Cu1.0 | no change | no change |
| Ag98.9Pd1.0Cu0.1 | no change | no change |
| Ag97.9Pd2.0Cu0.1 | no change | no change |
| Ag96.9Pd3.0Cu0.1 | no change | no change |
| Ag96.5Pd3.0Cu0.5 | no change | no change |
| Ag94.0Pd3.0Cu3.0 | no change | no change |
| **Ag99.4Pd0.1Ti0.1** | no change | no change |
| Ag99.4Pd0.5Ti0.1 | no change | no change |
| Ag98.1Pd0.9Ti1.0 | no change | no change |
| Ag98.9Pd1.0Ti0.1 | no change | no change |
| Ag97.9Pd2.0Ti0.1 | no change | no change |
| Ag96.9Pd3.0Ti0.1 | no change | no change |
| Ag96.5Pd3.0T10.5 | no change | no change |
| Ag94.0Pd3.0Ti3.0 | no change | no change |
| **Ag99.8Pd0.1Au0.1** | no change | no change |
| Ag98.4Pd0.1Au1.5 | no change | no change |
| Ag96.9Pd0.1Au3.0 | no change | no change |
| Ag98.4Pd1.5Au0.1 | no change | no change |
| Ag97.0Pd1.5Au1.5 | no change | no change |
| Ag95.5Pd1.5Au3.0 | no change | no change |
| Ag96.9Pd3.0Au0.1 | no change | no change |
| Ag95.5Pd3.0Au1.5 | no change | no change |
| Ag94.0Pd3.0Au3.0 | no change | no change |
| **Ag99.8Pd0.1Cr0.1** | no change | no change |
| Ag98.4Pd0.1Cr1.5 | no change | no change |
| Ag96.9Pd0.1Cr3.0 | no change | no change |
| Ag98.4Pd1.5Cr0.1 | no change | no change |
| Ag97.0Pd1.5Cr1.5 | no change | no change |
| Ag95.5Pd1.5Cr3.0 | no change | no change |
| Ag96.9Pd3.0Cr0.1 | no change | no change |
| Ag95.5Pd3.0Cr1.5 | no change | no change |
| Ag94.0Pd3.0Cr3.0 | no change | no change |
| **Ag99.8Pd0.1Ta0.1** | no change | no change |
| Ag98.4Pd0.1Ta1.5 | no change | no change |
| Ag96.9Pd0.1Ta3.0 | no change | no change |
| Ag98.4Pd1.5Ta0.1 | no change | no change |
| Ag97.0Pd1.5Ta1.5 | no change | no change |
| Ag95.5Pd1.5Ta3.0 | no change | no change |
| Ag96.9Pd3.0Ta0.1 | no change | no change |
| Ag95.5Pd3.0Ta1.5 | no change | no change |
| Ag94.0Pd3.0Ta3.0 | no change | no change |
| **Ag99.8Pd0.1Mo0.1** | no change | no change |
| Ag98.4Pd0.1Mo1.5 | no change | no change |
| Ag96.9Pd0.1Mo3.0 | no change | no change |
| Ag98.4Pd1.5Mo0.1 | no change | no change |
| Ag97.0Pd1.5Mo1.5 | no change | no change |
| Ag95.5Pd1.5Mo3.0 | no change | no change |
| Ag96.9Pd3.0Mo0.1 | no change | no change |
| Ag95.5Pd3.0Mo1.5 | no change | no change |
| Ag94.0Pd3.0Mo3.0 | no change | no change |
| **Ag98.4Pd0.1Ni0.1** | no change | no change |
| Ag98.4Pd0.1Ni1.5 | no change | no change |
| Ag96.9Pd0.1Ni3.0 | no change | no change |
| Ag98.4Pd1.5Ni0.1 | no change | no change |
| Ag97.0Pd1.5Ni1.5 | no change | no change |
| Ag95.5Pd1.5Ni3.0 | no change | no change |
| Ag96.9Pd3.0Ni0.1 | no change | no change |
| Ag95.5Pd3.0Ni1.5 | no change | no change |
| Ag94.0Pd3.0Ni3.0 | no change | no change |
| **Ag99.8Pd0.1Al0.1** | no change | no change |
| Ag98.4Pd0.1Al1.5 | no change | no change |
| Ag96.9Pd0.1Al3.0 | no change | no change |
| Ag98.4Pd1.5Al0.1 | no change | no change |
| Ag97.0Pd1.5Al1.5 | no change | no change |
| Ag95.5Pd1.5Al3.0 | no change | no change |
| Ag96.9Pd3.0Al0.1 | no change | no change |
| Ag95.5Pd3.0Al1.5 | no change | no change |
| Ag94.0Pd3.0Al3.0 | no change | no change |
| **Ag99.8Pd0.1Nb0.1** | no change | no change |
| Ag98.4Pd0.1Nb1.5 | no change | no change |
| Ag96.9Pd0.1Nb3.0 | no change | no change |
| Ag98.4Pd1.5Nb0.1 | no change | no change |
| Ag97.0Pd1.5Nb1.5 | no change | no change |
| Ag95.5Pd1.5Nb3.0 | no change | no change |
| Ag96.9Pd3.0Nb0.1 | no change | no change |
| Ag95.5Pd3.0Nb1.5 | no change | no change |
| Ag94.0Pd3.0Nb3.0 | no change | no change |
| **Ag99.8Ru0.1Au0.1** | no change | no change |
| Ag98.4Ru0.1Au1.5 | no change | no change |
| Ag96.9Ru0.1Au3.0 | no change | no change |
| Ag98.4Ru1.5Au0.1 | no change | no change |
| Ag97.0Ru1.5Au1.5 | no change | no change |
| Ag95.5Ru1.5Au3.0 | no change | no change |
| Ag96.9Ru3.0Au0.1 | no change | no change |
| Ag95.5Ru3.0Au1.5 | no change | no change |
| Ag94.0Ru3.0Au3.0 | no change | no change |
| **Ag99.8Pd0.1Ru0.1** | no change | no change |
| Ag98.4Pd0.1Ru1.5 | no change | no change |
| Ag96.9Pd0.1Ru3.0 | no change | no change |
| Ag98.4Pd1.5Ru0.1 | no change | no change |
| Ag97.0Pd1.5Ru1.5 | no change | no change |
| Ag95.5Pd1.5Ru3.0 | no change | no change |
| Ag96.9Pd3.0Ru0.1 | no change | no change |
| Ag95.5Pd3.0Ru1.5 | no change | no change |
| Ag94.0Pd3.0Ru3.0 | no change | no change |

| AgAuX | | |
|---|---|---|
| Ag98.0Au2.0 | many black stains | detachment occured |
| Ag97.0Au3.0 | moderate black stains | detachment occured |
| **Ag99.8Au0.1Cu0.1** | no change | no change |
| Ag99.4Au0.5Cu0.1 | no change | no change |
| Ag98.1Au0.9Cu1.0 | no change | no change |
| Ag98.9Au1.0Cu0.1 | no change | no change |
| Ag97.9Au2.0Cu0.1 | no change | no change |
| Ag96.9Au3.0Cu0.1 | no change | no change |
| Ag96.5Au3.0Cu0.5 | no change | no change |
| Ag94.0Au3.0Cu3.0 | no change | no change |
| **Ag99.8Au0.1Ti0.1** | no change | no change |
| Ag99.4Au0.5Ti0.1 | no change | no change |
| Ag98.1Au0.9Ti1.0 | no change | no change |
| Ag98.9Au1.0Ti0.1 | no change | no change |
| Ag97.9Au2.0Ti0.1 | no change | no change |
| Ag96.9Au3.0Ti0.1 | no change | no change |
| Ag96.5Au3.0Ti0.5 | no change | no change |
| Ag94.0Au3.0Ti3.0 | no change | no change |
| **Ag99.8Au0.1Cr0.1** | no change | no change |
| Ag98.4Au0.1Cr1.5 | no change | no change |
| Ag96.9Au0.1Cr3.0 | no change | no change |
| Ag98.4Au1.5Cr0.1 | no change | no change |
| Ag97.0Au1.5Cr1.5 | no change | no change |
| Ag95.5Au1.5Cr3.0 | no change | no change |
| Ag96.9Au3.0Cr0.1 | no change | no change |
| Ag95.5Au3.0Cr1.5 | no change | no change |
| Ag94.0Au3.0Cr3.0 | no change | no change |
| **Ag99.8Au0.1Ta0.1** | no change | no change |
| Ag98.4Au0.1Ta1.5 | no change | no change |
| Ag96.9Au0.1Ta3.0 | no change | no change |
| Ag98.6Au1.5Ta0.1 | no change | no change |
| Ag97.0Au1.5Ta1.5 | no change | no change |
| Ag95.5Au1.5Ta3.0 | no change | no change |
| Ag96.9Au3.0Ta0.1 | no change | no change |
| Ag95.5Au3.0Ta1.5 | no change | no change |
| Ag94.0Au3.0Ta3.0 | no change | no change |
| **Ag99.8Au0.1Mo0.1** | no change | no change |
| Ag98.4Au0.1Mo1.5 | no change | no change |
| Ag96.9Au0.1Mo3.0 | no change | no change |
| Ag98.4Au1.5Mo0.1 | no change | no change |
| Ag97.0Au1.5Mo1.5 | no change | no change |
| Ag95.5Au1.5Mo3.0 | no change | no change |
| Ag96.9Au3.0Mo0.1 | no change | no change |
| Ag95.5Au3.0Mo1.5 | no change | no change |
| Ag94.0Au3.0Mo3.0 | no change | no change |
| **Ag99.8Au0.1Ni0.1** | no change | no change |
| Ag98.4Au0.1Ni1.5 | no change | no change |
| Ag96.9Au0.1Ni3.0 | no change | no change |
| Ag98.4Au1.5Ni0.1 | no change | no change |
| Ag97.0Au1.5Ni1.5 | no change | no change |
| Ag95.5Au1.5Ni3.0 | no change | no change |
| Ag96.9Au3.0Ni0.1 | no change | no change |
| Ag95.5Au3.0Ni1.5 | no change | no change |
| Ag94.0Au3.0Ni3.0 | no change | no change |
| **Ag99.8Au0.1Al0.1** | no change | no change |
| Ag98.4Au0.1Al1.5 | no change | no change |
| Ag96.9Au0.1Al3.0 | no change | no change |
| Ag98.4Au1.5Al0.1 | no change | no change |
| Ag97.0Au1.5Al1.5 | no change | no change |
| Ag95.5Au1.5Al3.0 | no change | no change |
| Ag96.9Au3.0Al0.1 | no change | no change |
| Ag95.5Au3.0Al1.5 | no change | no change |
| Ag94.0Au3.0Al3.0 | no change | no change |
| **Ag99.8Au0.1Nb0.1** | no change | no change |
| Ag98.4Au0.1Nb1.5 | no change | no change |
| Ag96.9Au0.1Nb3.0 | no change | no change |
| Ag98.4Au1.5Nb0.1 | no change | no change |
| Ag97.0Au1.5Nb1.5 | no change | no change |
| Ag95.5Au1.5Nb3.0 | no change | no change |
| Ag96.9Au3.0Nb0.1 | no change | no change |
| Ag95.5Au3.0Nb1.5 | no change | no change |
| Ag94.0Au3.0Nb3.0 | no change | no change |

| AgRuX | | |
|---|---|---|
| Ag98.0Ru2.0 | many black stains | detachment occured |
| Ag97.0Ru3.0 | moderate black stains | detachment occured |
| **Ag99.8Ru0.1Cu0.1** | no change | no change |
| Ag99.4Ru0.5Cu0.1 | no change | no change |
| Ag98.1Ru0.9Cu1.0 | no change | no change |
| Ag98.9Ru1.0Cu0.1 | no change | no change |
| Ag97.9Ru2.0Cu0. 1 | no change | no change |
| Ag96.9Ru3.0Cu0.1 | no change | no change |
| Ag96.5Ru3.0Cu0.5 | no change | no change |
| Ag94.0Ru3.0Cu3.0 | no change | no change |
| **Ag99.8Ru0.1Ti0.1** | no change | no change |
| Ag99.4Ru0.5Ti0.1 | no change | no change |
| Ag98.1Ru0.9Ti1.0 | no change | no change |
| Ag98.9Ru1.0Ti0.1 | no change | no change |
| Ag97.9Ru2.0Ti0.1 | no change | no change |
| Ag96.9Ru3.0Ti0.1 | no change | no change |
| Ag96.5Ru3.0Ti0.5 | no change | no change |
| Ag94.0Ru3.0Ti3.0 | no change | no change |
| **Ag99.8Ru0.1Cr0. 1** | no change | no change |
| Ag98.4Ru0.1Cr1.5 | no change | no change |
| Ag96.9Ru0.1Cr3.0 | no change | no change |
| Ag98.4Ru1.5Cr0.1 | no change | no change |
| Ag97.0Ru1.5Cr1.5 | no change | no change |
| Ag95.5Ru1.5Cr3.0 | no change | no change |
| Ag96.9Ru3.0Cr0.1 | no change | no change |
| Ag95.5Ru3.0Cr1.5 | no change | no change |
| Ag94.0Ru3.0Cr3.0 | no change | no change |
| **Ag99.8Ru0.1Ta0.1** | no change | no change |
| Ag98.4Ru0.1Ta1.5 | no change | no change |
| Ag96.9Ru0.1Ta3.0 | no change | no change |
| Ag98.4Ru1.5Ta0.1 | no change | no change |
| Ag97.0Ru1.5Ta1.5 | no change | no change |
| Ag95.5Ru1.5Ta3.0 | no change | no change |
| Ag96.9Ru3.0Ta0.1 | no change | no change |
| Ag95.5Ru3.0Ta1.5 | no change | no change |
| Ag94.0Ru3.0Ta3.0 | no change | no change |
| **Ag99.8Ru0.1Mo0.1** | no change | no change |
| Ag98.4Ru0.1Mo1.5 | no change | no change |
| Ag96.9Ru0.1Mo3.0 | no change | no change |
| Ag98.4Ru1.5Mo0.1 | no change | no change |
| Ag97.0Ru1.5Mo1.5 | no change | no change |
| Ag95.5Ru1.5Mo3.0 | no change | no change |
| Ag96.9Ru3.0Mo0.1 | no change | no change |
| Ag95.5Ru3.0Mol.5 | no change | no change |
| Ag94.0Ru3.0Mo3.0 | no change | no change |
| **Ag99.8Ru0.1Ni0.1** | no change | no change |
| Ag98.4Ru0.1Ni1.5 | no change | no change |
| Ag96.9Ru0.1Ni3. 0 | no change | no change |
| Ag98.4Ru1.5Ni0.1 | no change | no change |
| Ag97.0Ru1.5Ni1.5 | no change | no change |
| Ag95.5Ru1.5Ni3.0 | no change | no change |
| Ag96.9Ru3.0Ni0.1 | no change | no change |
| Ag95.5Ru3.0Ni1.5 | no change | no change |
| Ag94.0Ru3.0Ni3.0 | no change | no change |
| **Ag99.8Ru0.1Al0.1** | no change | no change |
| Ag98.4Ru0.1Al1.5 | no change | no change |
| Ag96.9Ru0.1Al3.0 | no change | no change |
| Ag98.4Ru1.5Al0.1 | no change | no change |
| Ag97.0Ru1.5Al1.5 | no change | no change |
| Ag95.5Ru1.5Al3.0 | no change | no change |
| Ag96.9Ru3.0Al0.1 | no change | no change |
| Ag95.5Ru3.0Al1.5 | no change | no change |
| Ag94.0Ru3.0Al3.0 | no change | no change |
| **Ag99.8Ru0.1Nb0. 1** | no change | no change |
| Ag98.4Ru0.1Nb1.5 | no change | no change |
| Ag96.9Ru0.1Nb3.0 | no change | no change |
| Ag98.4Ru1.5Nb0.1 | no change | no change |
| Ag97.0Ru1.5Nb1.5 | no change | no change |
| Ag95.5Ru1.5Nb3.0 | no change | no change |
| Ag96.9Ru3.0Nb0.1 | no change | no change |
| Ag95.5Ru3.0Nb1.5 | no change | no change |
| Ag94.0Ru3.0Nb3.0 | no change | no change |

As shown in Table 5, no change was observed with the ternary Ag-alloy reflecting layers after 24 hours. When the reflection index of the ternary reflecting layer on the various resin substrates was measured by a spectrophotometer, no decrease in reflection index was observed at the optical wavelength of 565 nm, which is useful for reflection-type liquid crystal display devices, and in the optical wavelength regions from 400nm to 4 µ m, which is required for building glass (data not shown).

The ternary reflecting layers of the present invention proved to have high chemical stability against resin and to be not limited to a particular substrate material unlike conventional layers.

### Example 4

Adhesion between the ternary reflecting layers of the present invention and various substrates and the effect of the base film, which was placed between the reflecting layer and the substrate, on the adhesion were examined.

Firstly, the reflecting layers were deposited directly on the substrates of PMMA, PET, PC, silicone, acrylic resin, non-alkali glass, low-alkali glass, borosilicate glass, and quartz glass by RF sputtering to form a laminate. A JIS (Japanese Industrial Standard) cellophane tape was attached to the reflecting layer. The detachment of the reflecting layer from the substrate when the tape was stripped of at given tension was observed. In addion, the laminate was diced with a cutter and dipped in pure water in a beaker. Ultrasonic waves were applied to the pure water. The frequency of the ultrasonic waves was 50KHz and the electric power was 100W. After the application of the ultrasonic waves, detachment of the reflecting layer was observed under a x40 microscope and the necessity of the base film was examined.

No detachment was observed with PMMA, PET, PC, silicone, and acrylic resin. The reflecting layer of the present invention was much more adhesive to the resin substrates compared with conventional layers of Al, Al alloy, Ag, or Ag alloy.

On the other hand, partially or extensive detachment was observed with non-alkali glass, low-alkali glass, borosilicate glass, and quartz glass. The reflecting layer of the present invention had poor adhesion to the glass substrates although the degree of detachment is different in cases (data not shown).

Secondarily, to improve adhesion of the reflecting layer to the glass substrate or to attain high reflecting performance without impairing the reflection index of the reflecting layer, the base film of Si, Ta, Ti, Mo, Cr, Al, ITO, ZnO₂, SiO₂, TiO₂, Ta₂O₅, ZrO₂, In₂O₃, SnO₂, Nb₂O₅, or MgO was applied to the substrates of PMMA, PET, PC, silicone, acrylic resin, non-alkali glass, low-alkali glass, borosilicate glass, and quartz glass by RF sputtering. Then the ternary reflecting layer of the present invention was deposited on the base film by RF sputtering to form a laminate. A strip of JIS cellophane tape was attached to the uppermost layer. The detachment of the reflecting layer from the substrate when the tape was stripped of at given tension was observed as described above. In addition, the laminate was diced with a cutter and dipped in pure water in a beaker. Ultrasonic waves were applied to the pure water. The frequency of the ultrasonic waves was 50KHz and the electric power was 100W. After the application of the ultrasonic waves, detachment of the reflecting layer was observed under a x40 microscope and the effect of the base film was examined.

As shown in Table 6, when the base film was used, no detachment was observed whether the reflecting layer was pure Ag or an Ag alloy. The reflection index of the reflecting layer used in the tests was measured by a spectrophotometer. Table 7 showed that not only the adhesion but also the reflection index were improved when a specific base film (TiO₂-Nb₂O₅) was used.

**Table 6**

| Material of base film | Detachment tests | | | |
|---|---|---|---|---|
| | 5min | 10min | 15min | 20min |
| In2O₃ | no detachment | no detachment | no detachment | no detachment |
| SnO₂ | no detachment | no detachment | no detachment | no detachment |
| Nb₂O₅ | no detachment | no detachment | no detachment | no detachment |
| MgO | no detachment | no detachment | no detachment | no detachment |
| ITO | no detachment | no detachment | no detachment | no detachment |
| ZnO₂ | no detachment | no detachment | no detachment | no detachment |
| SiO₂ | no detachment | no detachment | no detachment | no detachment |
| TiO₂ | no detachment | no detachment | no detachment | no detachment |
| Ta₂O₅ | no detachment | no detachment | no detachment | no detachment |
| ZrO₂ | no detachment | no detachment | no detachment | no detachment |
| Si | no detachment | no detachment | no detachment | no detachment |
| Ta | no detachment | no detachment | no detachment | no detachment |
| Ti | no detachment | no detachment | no detachment | no detachment |
| Mo | no detachment | no detachment | no detachment | no detachment |
| Cr | no detachment | no detachment | no detachment | no detachment |
| Al | no detachment | no detachment | no detachment | no detachment |

**Table 7**

| Material | wavelength 400.00 nm | wavelength 450.00 nm | wavelength 500.00 nm | wavelength 550.00 nm | wavelength 565.00 nm |
|---|---|---|---|---|---|
| | reflection index (%) | reflection index (%) | reflection index (%) | reflection index (%) | reflection index (%) |
| pure Ag | 94.80 | 96.60 | 97.70 | 97.90 | 98.00 |
| AgPd | 92.30 | 94.05 | 95.12 | 95.32 | 95.42 |
| AgPdCu | 91.50 | 92.40 | 93.60 | 94.10 | 93.36 |
| AgPdTi | 88.90 | 90.59 | 91.62 | 91.81 | 91.90 |
| AgPdCr | 88.40 | 90.08 | 91.11 | 91.29 | 91.38 |
| AgPdTa | 88.30 | 89.98 | 91.00 | 91.19 | 91.28 |
| AgPdMo | 88.00 | 89.67 | 90.69 | 90.88 | 90.97 |
| AgPdNi | 88.20 | 89.77 | 90.89 | 90.98 | 91.17 |
| AgPdAl | 88.90 | 90.49 | 91.61 | 91.70 | 91.79 |
| AgPdNb | 88.80 | 90.38 | 91.51 | 91.60 | 91.79 |
| AgAu | 92.80 | 94.56 | 95.64 | 95.83 | 95.93 |
| AgAuCu | 92.46 | 94.22 | 95.29 | 95.48 | 95.58 |
| AgAuTi | 88.44 | 90.12 | 91.15 | 91.33 | 91.43 |
| AgAuCr | 88.56 | 90.24 | 91.27 | 91.46 | 91.55 |
| AgAuTa | 88.30 | 89.98 | 91.00 | 91.19 | 91.28 |
| AgAuNi | 88.00 | 89.67 | 90.69 | 90.88 | 90.97 |
| AgAuMo | 88.10 | 89.77 | 90.80 | 90.98 | 91.07 |
| AgAuPd | 89.00 | 90.69 | 91.72 | 91.91 | 92.00 |
| AgAuAl | 88.70 | 90.39 | 91.41 | 91.60 | 91.69 |
| AgAuNb | 88.60 | 90.28 | 91.31 | 91.50 | 91.59 |
| AgRu | 89.00 | 90.69 | 91.72 | 91.91 | 92.00 |
| AgRuCu | 88.45 | 90.13 | 91.16 | 91.34 | 91.44 |
| AgRuTi | 88.34 | 90.02 | 91.04 | 91.23 | 91.32 |
| AgRuCr | 88.76 | 90.45 | 91.48 | 91.66 | 91.76 |
| AgRuTa | 88.23 | 89.91 | 90.93 | 91.12 | 91.21 |
| AgRuNi | 87.80 | 89.47 | 90.49 | 90.67 | 90.76 |
| AgRuMo | 88.44 | 90.12 | 91.15 | 91.33 | 91.43 |
| AgRuPd | 87.67 | 89.34 | 90.35 | 90.54 | 90.63 |
| AgRuAl | 88.97 | 90.66 | 91.69 | 91.88 | 91.97 |
| AgRuNb | 87.98 | 89.65 | 90.67 | 90.86 | 90.95 |

Particularly, the base films of TiO₂, Ta₂O₅, ZrO₂, In₂O₃, SnO₂, Nb₂O₅, and Mg had high refraction indices and low absorptivities, as represented by In₂O₃-Nb₂O₅ in Table 8. Changes in optical characteristics based on the refraction index were prevented in these films.

**Table 8**

| | In₂O₃-15wt%Nb₂ O₅ | In₂O₃-12.5wt%NB₂O₅ | In₂O₃-10wt%NB₂O₅ | In₂O₃-7.5wt%NB₂O₅ | In₂O₃-5wt%NB₂O₅ |
|---|---|---|---|---|---|
| | refraction index | refraction index | refraction index | refraction index | refraction index |
| 400 | 2.34 | 2.32 | 2.34 | 2.30 | 2.34 |
| 450 | 2.26 | 2.25 | 2.26 | 2.23 | 2.26 |
| 500 | 2.22 | 2.21 | 2.21 | 2.18 | 2.20 |
| 550 | 2.19 | 2.18 | 2.18 | 2.16 | 2.17 |
| 560 | 2.19 | 2.18 | 2.17 | 2.15 | 2.17 |

### Example 5

The effect of a coating layer on heat resistance and reflection index of the reflecting layer was examined. On the conventional Ag reflecting layers (pure Ag or binary Ag alloy) or the ternary reflecting layers of the present invention, a coating layer that includes In₂O₃ as a main component and at least one of SnO₂, Nb₂O₅, SiO₂, MgO and Ta₂O₅ was deposited to form a laminate. The laminate was annealed at the temperature 250 °C, which is the temperature applied to the substrate during the manufacturing process of the liquid crystal display device.

Without a coating layer, the optical absorptivity of reflecting layer increased after annealing, which led to deterioration of the layer, as shown in Table 9. The experimental data of optical absorptivity when the coating layer was used for heat resistance were shown in Tables 10 to 12.

**Table 9**

| without a coating layer | | | | | | | | | | |
|---|---|---|---|---|---|---|---|---|---|---|
| Material | anneal | | | | | as-depo | | | | |
| | wavelength 400 nm | wavelength 450 nm | wavelength 500 nm | wavelength 550 nm | wavelength 565 nm | wavelength 400 nm | wavelength 450 nm | wavelength 500 nm | wavelength 550 nm | wavelength 565 nm |
| | absorptivity (%) | absorptivity (%) | absorptivity (%) | absorptivity (%) | absorptivity (%) | absorptivity (%) | absorptivity (%) | absorptivity (%) | absorptivity (%) | absorptivity (%) |
| pure Ag | 5.2 | 3.6 | 2.8 | 2.8 | 1.9 | 5 | 3.2 | 2.1 | 2.6 | 1.8 |
| AgPd | 6.4 | 5.5 | 6.3 | 5.5 | 5.1 | 6.0 | 5.2 | 6.1 | 5.4 | 5.0 |
| AgPdCu | 6.6 | 5.7 | 6.5 | 5.8 | 5.5 | 6.5 | 5.6 | 6.2 | 5.7 | 5.1 |
| AgPdTi | 6.9 | 5.9 | 6.6 | 5.7 | 5.5 | 6.7 | 5.8 | 6.4 | 5.6 | 5.3 |
| AgPdCr | 6.8 | 5.9 | 6.5 | 5.7 | 5.3 | 6.6 | 5.8 | 6.3 | 5.5 | 5.0 |
| AgPdTa | 6.6 | 5.8 | 6.6 | 5.8 | 5.3 | 6.4 | 5.5 | 6.3 | 5.6 | 5.0 |
| AgPdMo | 6.8 | 6.9 | 6.4 | 5.5 | 5.5 | 6.6 | 6.7 | 6.3 | 5.5 | 5.2 |
| AgPdNi | 6.7 | 5.7 | 6.2 | 5.5 | 5.4 | 6.4 | 5.7 | 5.9 | 5.5 | 5.1 |
| AgPdAl | 6.6 | 6.6 | 6.4 | 5.5 | 5.2 | 6.5 | 6.5 | 6.2 | 5.5 | 5.1 |
| AgPdNb | 6.7 | 5.8 | 6.3 | 5.7 | 5.1 | 6.5 | 5.7 | 6.3 | 5.4 | 4.9 |
| AgAu | 6.3 | 5.3 | 6.2 | 5.3 | 5.0 | 6.0 | 5.1 | 6.0 | 5.2 | 5.0 |
| AgAuCu | 7.4 | 6.7 | 7.2 | 6.2 | 6.2 | 7.1 | 6.5 | 7.0 | 6.1 | 6.0 |
| AgAuTi | 6.6 | 5.8 | 6.4 | 5.7 | 5.3 | 6.4 | 5.2 | 6.3 | 5.6 | 5.2 |
| AgAuCr | 6.8 | 5.9 | 6.6 | 5.8 | 5.5 | 6.7 | 5.8 | 6.4 | 5.6 | 5.3 |
| AgAuTa | 6.9 | 5.9 | 6.5 | 5.7 | 5.3 | 6.6 | 5.8 | 6.3 | 5.6 | 5.2 |
| AgAuNi | 6.8 | 5.9 | 6.3 | 5.7 | 5.4 | 6.5 | 5.8 | 6.1 | 5.6 | 5.2 |
| AgAuMo | 6.7 | 6.8 | 6.4 | 5.6 | 5.4 | 6.6 | 6.7 | 6.3 | 5.5 | 5.2 |
| AgAuPd | 7.5 | 6.3 | 7.5 | 6.3 | 6.2 | 7.1 | 6.1 | 7.0 | 6.2 | 6.0 |
| AgAuAl | 6.7 | 6.7 | 6.5 | 5.6 | 5.4 | 6.6 | 6.5 | 6.3 | 5.5 | 5.2 |
| AgAuNb | 6.8 | 5.9 | 6.4 | 5.7 | 5.2 | 6.6 | 5.8 | 6.3 | 5.5 | 5.0 |
| AgRu | 6.3 | 5.4 | 6.2 | 5.3 | 5.2 | 6.1 | 5.1 | 6.0 | 5.3 | 5.1 |
| AgRuCu | 6.8 | 5.9 | 6.4 | 5.7 | 5.2 | 6.4 | 5.5 | 6.3 | 5.6 | 5.0 |
| AgRuTi | 6.7 | 5.9 | 6.5 | 5.6 | 5.2 | 6.6 | 5.8 | 6.3 | 5.5 | 5.0 |
| AgRuCr | 6.7 | 5.9 | 6.6 | 5.7 | 5.3 | 6.5 | 5.7 | 6.3 | 5.5 | 5.0 |
| AgRuTa | 6.5 | 5.8 | 6.7 | 5.7 | 5.2 | 6.4 | 5.5 | 6.3 | 5.6 | 5.0 |
| AgRuNi | 7.3 | 6.6 | 7.5 | 6.3 | 6.3 | 7.1 | 6.4 | 7.0 | 6.1 | 6.0 |
| AgRuMo | 7.3 | 6.8 | 7.3 | 6.2 | 6.2 | 7.1 | 6.3 | 7.1 | 6.1 | 6.0 |
| AgRuPd | 6.7 | 6.8 | 6.4 | 5.5 | 5.3 | 6.6 | 6.6 | 6.2 | 5.4 | 5.2 |
| AgRuAl | 6.8 | 6.9 | 6.4 | 5.6 | 5.3 | 6.6 | 6.7 | 6.3 | 5.5 | 5.2 |
| AgRuNb | 6.8 | 6.9 | 6.3 | 5.6 | 5.4 | 6.5 | 6.6 | 6.1 | 5.5 | 5.2 |

**Table 10**

| SiO₂/Ag alloy | | | | | | | | | | |
|---|---|---|---|---|---|---|---|---|---|---|
| Material | SiO₂ anneal | | | | | SiO₂ as-depo | | | | |
| | wavelength 400 nm | wavelength 450 nm | wavelength 500 nm | wavelength 550 nm | wavelength 565 nm | wavelength 400 nm | wavelength 450 nm | wavelength 500 nm | wavelength 550 nm | wavelength 565 nm |
| | absorptivity (%) | absorptivity (%) | absorptivity (%) | absorptivity (%) | absorptivity (%) | absorptivity (%) | absorptivity (%) | absorptivity (%)) | absorptivity (%) | absorptivity (%) |
| pure Ag | 26.5 | 11.65 | 4.92 | 4.72 | 5.02 | 34.5 | 16.64 | 5.81 | 5.71 | 5.05 |
| AgPd | 26.8 | 12.59 | 5.68 | 5.23 | 6.96 | 27.8 | 14.59 | 8.68 | 6.23 | 8.98 |
| AgPdCu | 27.09 | 13.06 | 8.94 | 6.77 | 6.28 | 35.8 | 18.64 | 11.91 | 8.74 | 8.05 |
| AgPdTi | 36.5 | 17.54 | 11.45 | 8.58 | 7.59 | 36.8 | 17.68 | 11.85 | 8.76 | 8.00 |
| AgPdCr | 35.5 | 18.45 | 10.59 | 8.58 | 7.96 | 35.9 | 18.65 | 10.69 | 8.75 | 8.04 |
| AgPdTa | 36.1 | 18.44 | 11.34 | 8.50 | 7.58 | 36.2 | 18.54 | 11.54 | 8.54 | 8.02 |
| AgPdMo | 36.4 | 18.57 | 11.15 | 8.41 | 7.21 | 36.5 | 18.67 | 11.59 | 8.45 | 7.25 |
| AgPdNi | 35.78 | 18.21 | 11.07 | 8.29 | 7.37 | 36.29 | 18.55 | 10.94 | 8.25 | 7.11 |
| AgPdAl | 35.89 | 18.15 | 10.8 | 8.33 | 7.64 | 36.58 | 18.41 | 11.39 | 8.42 | 7.76 |
| AgPdNb | 35.88 | 18.13 | 10.86 | 8.29 | 6.93 | 36.99 | 18.53 | 11.08 | 8.26 | 7.1 |
| AgAu | 26.2 | 12.31 | 5.50 | 5.10 | 7.99 | 27.7 | 14.45 | 8.52 | 6.12 | 8.85 |
| AgAuCu | 36.1 | 17.53 | 11.45 | 8.58 | 7.25 | 36.5 | 18.66 | 11.25 | 8.25 | 7.36 |
| AgAuTi | 35.4 | 18.40 | 10.59 | 8.58 | 7.96 | 36.3 | 17.67 | 11.80 | 8.73 | 8.00 |
| AgAuCr | 36.0 | 18.32 | 11.34 | 8.50 | 7.58 | 36.2 | 18.64 | 10.25 | 8.75 | 8.04 |
| AgAuTa | 36.3 | 18.44 | 11.15 | 8.41 | 7.21 | 36.5 | 18.53 | 11.55 | 8.54 | 8.00 |
| AgAuNi | 36.0 | 18.31 | 11.32 | 8.50 | 7.58 | 36.4 | 18.66 | 11.20 | 8.41 | 7.25 |
| AgAuMo | 36.0 | 18.35 | 11.58 | 8.50 | 7.58 | 36.8 | 17.65 | 11.84 | 8.73 | 8.00 |
| AgAuPd | 36.3 | 18.58 | 11.14 | 8.41 | 7.21 | 37.0 | 18.61 | 10.21 | 8.74 | 8.02 |
| AgAuAl | 36.1 | 18.24 | 11.05 | 8.45 | 7.85 | 36.7 | 18.51 | 11.52 | 8.56 | 8.00 |
| AgAuNb | 36.1 | 18.25 | 11.11 | 8.41 | 7.14 | 37.1 | 18.62 | 11.21 | 8.41 | 7.24 |
| AgRu | 26.5 | 12.45 | 5.55 | 5.25 | 7.96 | 27.7 | 14.59 | 8.75 | 6.35 | 8.99 |
| AgRuCu | 36.0 | 17.52 | 11.45 | 8.58 | 7.25 | 36.4 | 17.66 | 11.81 | 8.73 | 7.56 |
| AgRuTi | 35.3 | 18.49 | 10.59 | 8.58 | 7.96 | 36.2 | 18.64 | 10.24 | 8.75 | 7.35 |
| AgRuCr | 35.8 | 18.30 | 11.34 | 8.50 | 7.58 | 36.1 | 18.52 | 11.55 | 8.54 | 8.00 |
| AgRuTa | 36.2 | 18.42 | 11.15 | 8.41 | 7.21 | 36.4 | 18.65 | 11.21 | 8.42 | 7.52 |
| AgRuNi | 36.1 | 18.35 | 11.33 | 8.50 | 7.58 | 36.9 | 17.64 | 11.84 | 8.71 | 8.01 |
| AgRuMo | 36.1 | 18.34 | 11.58 | 8.50 | 7.58 | 36.8 | 18.60 | 10.22 | 8.72 | 8.02 |
| AgRuPd | 36.2 | 18.59 | 11.28 | 8.41 | 7.21 | 37.1 | 18.50 | 11.51 | 8.51 | 7.96 |
| AgRuAl | 36.3 | 18.55 | 11.18 | 8.41 | 7.21 | 36.5 | 18.61 | 11.20 | 8.42 | 7.24 |
| AgRuNb | 36.5 | 18.24 | 11.11 | 8.41 | 7.21 | 37.2 | 18.41 | 10.12 | 8.85 | 8.12 |

**Table 11**

| In₂O₃-15Nb₂O₅/Ag alloy | | | | | | | | | | |
|---|---|---|---|---|---|---|---|---|---|---|
| Material | Hi-R anneal | | | | | Hi-R as-depo | | | | |
| | wavelength 400 nm | wave-length 450 nm | wavelength 500 nm | wavelength 550 nm | wavelength 565 nm | wavelength 400 nm | wavelength 450 nm | wavelength 500 nm | wavelength 550 nm | wavelength 565 nm |
| | absorptivity (%) | absorptivity (%) | absorptivity (%) | absorptivity (%) | absorptivity (%) | absorptivity (%) | absorptivity (%) | absorptivity (%) | absorptivity (%) | absorptivity (%) |
| pure Ag | 13.27 | 3.48 | 2.57 | 2.35 | 2.25 | 19.84 | 7.03 | 3.21 | 4.28 | 4.24 |
| AgPd | 15.77 | 5.34 | 3.93 | 3.90 | 3.802 | 22.15 | 8.83 | 4.57 | 5.80 | 5.78 |
| AgPdCu | 16.57 | 6.24 | 4.67 | 4.68 | 4.49 | 22.89 | 9.69 | 5.30 | 6.56 | 6.43 |
| AgPdTi | 19.17 | 9.16 | 7.64 | 7.65 | 7.47 | 25.29 | 12.51 | 8.25 | 9.47 | 9.35 |
| AgPdCr | 19.67 | 9.72 | 8.21 | 8.22 | 8.04 | 25.75 | 13.05 | 8.82 | 10.03 | 9.91 |
| AgPdTa | 19.77 | 9.84 | 8.33 | 8.34 | 8.15 | 25.85 | 13.16 | 8.93 | 10.14 | 10.02 |
| AgPdMo | 20.07 | 10.17 | 8.67 | 8.68 | 8.50 | 26.12 | 13.48 | 9.27 | 10.48 | 10.36 |
| AgPdNi | 19.85 | 10.07 | 8.42 | 8.47 | 8.31 | 26.01 | 13.37 | 9.01 | 10.33 | 10.22 |
| AgPdAl | 19.16 | 9.3 | 7.63 | 7.75 | 7.49 | 25.36 | 12.63 | 8.36 | 9.56 | 9.34 |
| AgPdNb | 19.25 | 9.38 | 7.73 | 7.87 | 7.6 | 25.46 | 12.74 | 8.46 | 9.66 | 9.54 |
| AgAu | 15.27 | 4.78 | 3.18 | 3.19 | 3.00 | 21.69 | 8.28 | 3.82 | 5.10 | 4.98 |
| AgAuCu | 15.61 | 5.16 | 3.57 | 3.58 | 3.39 | 22.00 | 8.65 | 4.21 | 5.48 | 5.36 |
| AgAuTi | 19.63 | 9.68 | 8.17 | 8.18 | 7.99 | 25.72 | 13.01 | 8.78 | 9.99 | 9.87 |
| AgAuCr | 19.51 | 9.54 | 8.03 | 8.04 | 7.86 | 25.61 | 12.88 | 8.64 | 9.85 | 9.73 |
| AgAuTa | 19.77 | 9.84 | 8.33 | 8.34 | 8.15 | 25.85 | 13.16 | 8.93 | 10.14 | 10.02 |
| AgAuNi | 20.07 | 10.17 | 8.67 | 8.68 | 8.50 | 26.12 | 13.48 | 9.27 | 10.48 | 10.36 |
| AgAuMo | 19.97 | 10.06 | 8.56 | 8.56 | 8.38 | 26.03 | 13.37 | 9.16 | 10.37 | 10.25 |
| AgAuPd | 19.07 | 9.05 | 7.53 | 7.54 | 7.35 | 25.20 | 12.40 | 8.14 | 9.36 | 9.24 |
| AgAuAl | 19.37 | 9.39 | 7.87 | 7.88 | 7.70 | 25.48 | 12.72 | 8.48 | 9.70 | 9.58 |
| AgAuNb | 19.47 | 9.50 | 7.98 | 7.99 | 7.81 | 25.57 | 12.83 | 8.59 | 9.81 | 9.69 |
| AgRu | 19.07 | 9.05 | 7.53 | 7.54 | 7.35 | 25.20 | 12.40 | 8.14 | 9.36 | 9.24 |
| AgRuCu | 19.62 | 9.67 | 8.16 | 8.16 | 7.98 | 25.71 | 12.99 | 8.76 | 9.98 | 9.86 |
| AgRuTi | 19.73 | 9.79 | 8.28 | 8.29 | 8.11 | 25.81 | 13.11 | 8.89 | 10.10 | 9.98 |
| AgRuCr | 19.31 | 9.32 | 7.80 | 7.81 | 7.63 | 25.42 | 12.66 | 8.41 | 9.63 | 9.51 |
| AgRuTa | 19.84 | 9.92 | 8.41 | 8.42 | 8.23 | 25.91 | 13.23 | 9.01 | 10.22 | 10.10 |
| AgRuNi | 20.27 | 10.40 | 8.90 | 8.91 | 8.73 | 26.31 | 13.70 | 9.50 | 10.70 | 10.58 |
| AgRuMo | 19.63 | 9.68 | 8.17 | 8.18 | 7.99 | 25.72 | 13.01 | 8.78 | 9.99 | 9.87 |
| AgRuPd | 20.40 | 10.55 | 9.05 | 9.06 | 8.88 | 26.43 | 13.84 | 9.65 | 10.85 | 10.73 |
| AgRuAl | 19.10 | 9.08 | 7.56 | 7.57 | 7.39 | 25.23 | 12.43 | 8.17 | 9.39 | 9.27 |
| AgRuNb | 20.09 | 10.20 | 8.69 | 8.70 | 8.52 | 26.14 | 13.50 | 9.30 | 10.50 | 10.38 |

**Table 12**

| ITO/Ag alloy | | | | | | | | | | |
|---|---|---|---|---|---|---|---|---|---|---|
| Material | ITO anneal | | | | | ITO as-depo | | | | |
| | wavelength 400 nm | wavelength 450 nm | wavelength 500 nm | wavelength 550 nm | wavelength 565 nm | wavelength 400 nm | wavelength 450 nm | wavelength 500 nm | wavelength 550 nm | wavelength 565 nm |
| | absorptivity (%) | absorptivity (%) | absorptivity (%) | absorptivity (%) | absorptivity (%) | absorptivity (%) | absorptivity (%) | absorptivity (%) | absorptivity (%) | absorptivity (%) |
| pure Ag | 15.56 | 4.87 | 3.63 | 4.64 | 1.82 | 19.05 | 4.27 | 1.77 | 1.52 | 5.02 |
| AgPd | 18.06 | 7.69 | 6.49 | 7.47 | 4.73 | 21.55 | 7.23 | 4.81 | 4.57 | 7.95 |
| AgPdCu | 18.86 | 8.59 | 7.40 | 8.37 | 5.66 | 22.35 | 8.18 | 5.78 | 5.54 | 8.89 |
| AgPdTi | 21.46 | 11.52 | 10.37 | 11.31 | 8.68 | 24.95 | 11.26 | 8.94 | 8.71 | 11.94 |
| AgPdCr | 21.96 | 12.09 | 10.94 | 11.87 | 9.27 | 25.45 | 11.85 | 9.54 | 9.31 | 12.53 |
| AgPdTa | 22.06 | 12.20 | 11.05 | 11.99 | 9.38 | 25.55 | 11.97 | 9.67 | 9.44 | 12.65 |
| AgPdMo | 22.36 | 12.54 | 11.40 | 12.32 | 9.73 | 25.85 | 12.32 | 10.03 | 9.80 | 13.00 |
| AgPdNi | 22.14 | 12.42 | 11.15 | 12.11 | 9.54 | 25.74 | 12.21 | 9.77 | 9.65 | 12.86 |
| AgPdAl | 21.45 | 11.66 | 10.37 | 11.4 | 8.64 | 25.04 | 11.4 | 9.07 | 8.83 | 11.96 |
| AgPdNb | 21.54 | 11.75 | 10.46 | 11.53 | 8.82 | 25.14 | 11.52 | 9.19 | 8.92 | 12.14 |
| AgAu | 17.56 | 7.13 | 5.92 | 6.90 | 4.15 | 21.05 | 6.64 | 4.20 | 3.96 | 7.36 |
| AgAuCu | 17.90 | 7.51 | 6.30 | 7.29 | 4.54 | 21.39 | 7.04 | 4.61 | 4.37 | 7.76 |
| AgAuTi | 21.92 | 12.04 | 10.89 | 11.83 | 9.22 | 25.41 | 11.80 | 9.50 | 9.27 | 12.48 |
| AgAuCr | 21.80 | 11.91 | 10.76 | 11.69 | 9.08 | 25.29 | 11.66 | 9.35 | 9.12 | 12.34 |
| AgAuTa | 22.06 | 12.20 | 11.05 | 11.99 | 9.38 | 25.55 | 11.97 | 9.67 | 9.44 | 12.65 |
| AgAuNi | 22.36 | 12.54 | 11.40 | 12.32 | 9.73 | 25.85 | 12.32 | 10.03 | 9.80 | 13.00 |
| AgAuMo | 22.26 | 12.43 | 11.28 | 12.21 | 9.62 | 25.75 | 12.20 | 9.91 | 9.68 | 12.88 |
| AgAuPd | 21.36 | 11.41 | 10.25 | 11.19 | 8.57 | 24.85 | 11.14 | 8.82 | 8.58 | 11.83 |
| AgAuAl | 21.66 | 11.75 | 10.60 | 11.53 | 8.92 | 25.15 | 11.49 | 9.18 | 8.95 | 12.18 |
| AgAuNb | 21.76 | 11.86 | 10.71 | 11.65 | 9.03 | 25.25 | 11.61 | 9.30 | 9.07 | 12.30 |
| AgRu | 21.36 | 11.41 | 10.25 | 11.19 | 8.57 | 24.85 | 11.14 | 8.82 | 8.58 | 11.83 |
| AgRuCu | 21.91 | 12.03 | 10.88 | 11.82 | 9.21 | 25.40 | 11.79 | 9.48 | 9.25 | 12.47 |
| AgRuTi | 22.02 | 12.15 | 11.01 | 11.94 | 9.34 | 25.51 | 11.92 | 9.62 | 9.39 | 12.60 |
| AgRuCr | 21.60 | 11.68 | 10.53 | 11.47 | 8.85 | 25.09 | 11.42 | 9.11 | 8.88 | 12.11 |
| AgRuTa | 22.13 | 12.28 | 11.13 | 12.06 | 9.46 | 25.62 | 12.05 | 9.75 | 9.52 | 12.73 |
| AgRuNi | 22.56 | 12.76 | 11.62 | 12.55 | 9.96 | 26.05 | 12.56 | 10.27 | 10.04 | 13.23 |
| AgRuMo | 21.92 | 12.04 | 10.89 | 11.83 | 9.22 | 25.41 | 11.80 | 9.50 | 9.27 | 12.48 |
| AgRuPd | 22.69 | 12.91 | 11.77 | 12.70 | 10.12 | 26.18 | 12.71 | 10.43 | 10.20 | 13.39 |
| AgRuAl | 21.39 | 11.44 | 10.29 | 11.23 | 8.60 | 24.88 | 11.17 | 8.85 | 8.62 | 11.86 |
| AgRuNb | 22.38 | 12.56 | 11.42 | 12.35 | 9.75 | 25.87 | 12.34 | 10.05 | 9.82 | 13.02 |

Table 11 showed that optical absorptivity of the reflecting layer was reduced much more after annealing in the reflecting layer with the coating layer of the present invention than the reflecting layer without the coating layer. The In₂O₃-15 wt% Nb₂O₅ coating layer of the present invention in Table 11 had lower absorptivity than the SiO₂ coating layer in Table 10 and the ITO coating layer in Table 12.

Table 13 showed that the optical characteristics of a . three-layer laminate that includes a base film, reflecting layer, and a coating layer after annealing at about 250 °C were similar to those in Tables 9 to 12. The adhesion of the laminate was also as good as the laminate in Table 6. The three-layer laminate was superior in both optical characteristics and adhesion.

The optical characteristics of the three-layer laminate was not impaired by through the use of the coating layer. On the contrary, when the coating layer including In₂O₃ as a main component and 1-30 wt% Nb₂O₅ was used, reflection index was increased by 1 %-6 % and the absorptivity was lowered after annealing at about 250 °C In₂O₃. Table 14 showed that improved reflection index and good optical characteristics can be obtained even when the thinner coating layers are used.

**Table 13**

| absorptivity | | | |
|---|---|---|---|
| | In₂O₃-5wt% Nb₂O₅ | | |
| | ①no heating | ②150 °C | ③ 300°C |
| 566 | 10.88 | 10.24 | 15.3 |
| 564 | 10.67 | 10.04 | 15.06 |
| 550 | 9.38 | 8.829 | 13.6 |
| 500 | 7.104 | 7.071 | 8.297 |
| 450 | 13.42 | 14.38 | 7.922 |
| 400 | 26.96 | 27.49 | 19.93 |

| | In₂O₃-10wt% Nb₂O₅ | | |
|---|---|---|---|
| | ①no heating | ②150 °C | ③300 °C |
| 566 | 11.13 | 12.39 | 13.11 |
| 564 | 10.91 | 12.16 | 12.88 |
| 550 | 9.639 | 10.71 | 11.42 |
| 500 | 7.113 | 7.166 | 7.236 |
| 450 | 12.72 | 11.8 | 9.97 |
| 400 | 27.29 | 26.6 | 24.28 |

| | In₂O₃-15wt% Nb₂O₅ | | |
|---|---|---|---|
| | ①no heating | ②150 °C | ③300 °C |
| 566 | 15.97 | 18.42 | 20.29 |
| 564 | 15.74 | 18.17 | 20.04 |
| 550 | 14.32 | 16.69 | 18.63 |
| 500 | 9.059 | 10.57 | 12.36 |
| 450 | 7.363 | 7.168 | 7.21 |
| 400 | 17.19 | 16.56 | 13.33 |

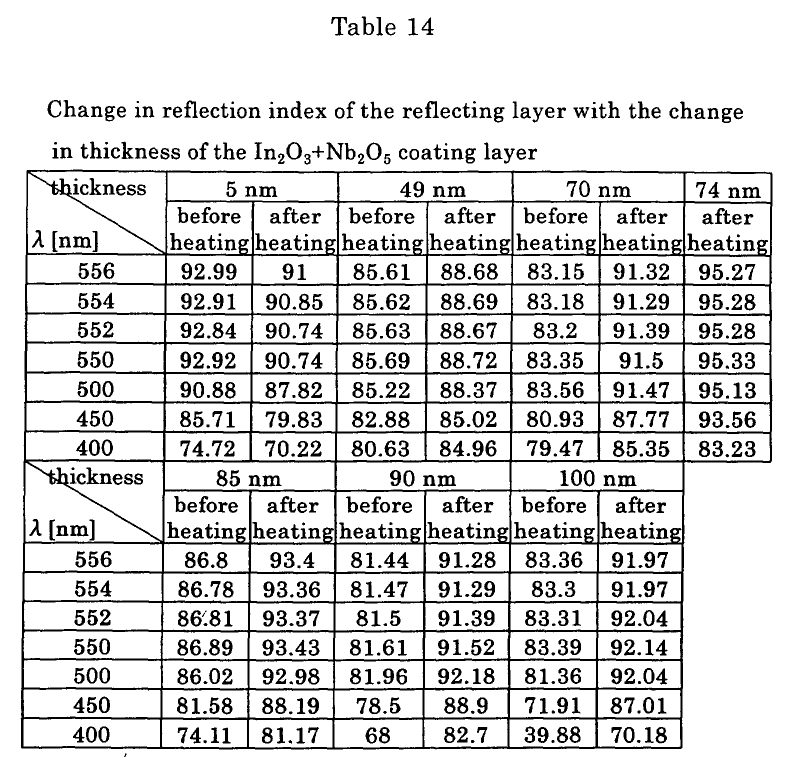

The present examples and embodiments are to be considered as illustrative and not restrictive and the invention is not to be limited to the details given herein, but may be modified within the scope and equivalence of the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A reflecting layer comprising:
Ag as a main component;
a 0.1-3.0 wt% first element selected from the group consisting of Au, Pd, and Ru; and
a 0.1-3.0 wt% second element selected from the group consisting of Cu, Ti, Cr, Ta, Mo, Ni, Al, Nb, Au, Pd, and Ru, wherein the second element is different from the first element.

2. The reflecting layer according to claim 1, wherein the reflecting layer is formed by deposition.

3. The reflecting layer according to claim 1, wherein the reflecting layer is formed by sputtering.

4. A laminate comprising:
a substrate; and
a reflecting layer deposited on the substrate,
wherein the reflecting layer includes Ag as a main component, a 0.1-3.0 wt% first element selected from the group consisting of Au, Pd, and Ru, and a 0.1-3.0 wt% second element selected from the group consisting of Cu, Ti, Cr, Ta, Mo, Ni, Al, Nb, Au, Pd, and Ru, wherein the second element is different from the first element.

5. The laminate according to claim 4, wherein the substrate is a resin substrate.

6. The laminate according to claim 4, wherein the substrate is a glass substrate.

7. A laminate comprising:
a substrate;
a base film deposited on the substrate, wherein the base film is made of at least one of Si, Ta, Ti, Mo, Cr, Al, ITO, ZnO₂, SiO₂, TiO₂, Ta₂O₅, ZrO₂, In₂O₃, SnO₂, Nb₂O₅, or MgO; and
an Ag-containing reflecting layer deposited on the base film.

8. The laminate according to claim 7, wherein the reflecting layer includes pure Ag or binary Ag alloy.

9. The laminate according to claim 7, wherein the reflecting layer includes Ag as a main component, a 0.1-3.0 wt% first element selected from the group consisting of Au, Pd, and Ru, and a 0.1-3.0 wt% second element selected from the group consisting of Cu, Ti, Cr, Ta, Mo, Ni, Al, Nb, Au, Pd, and Ru, wherein the second element is different from the first element.

10. The laminate according to any one of claims 7 to 9 further comprising a coating layer deposited on the reflecting layer, wherein the coating layer includes In₂O₃ as a main component and at least one of SnO₂, Nb₂O₅, SiO₂, MgO and Ta₂O₅.

11. The laminate according to any one of claims 7 to 9,
wherein the substrate is a glass substrate.

12. The laminate according to claim 7, wherein the base film is made of at least one of Si, Ta, Ti, Mo, Cr, or Al.

13. The laminate according to claim 7, wherein the base film is made of at least one of ITO, ZnO₂, SiO₂, TiO₂, Ta₂O₅, ZrO₂, In₂O₃, SnO₂, Nb₂O₅, or MgO.

14. The laminate according to claim 13, wherein the substrate is a resin substrate.

15. A laminate comprising:
an Ag-containing reflecting layer; and
a coating layer deposited on the reflecting layer,
wherein the coating layer includes In₂O₃ as a main component and at least one of SnO₂, Nb₂O₅, SiO₂, MgO, and Ta₂O₅.

16. The laminate according to claim 15, wherein the reflecting layer includes pure Ag or binary Ag alloy.

17. The laminate according to claim 15, wherein the reflecting layer includes Ag as a main component, a 0.1-3.0 wt% first element selected form the group consisting of Au, Pd, and Ru, and a 0.1-3.0 wt% second element selected from the group consisting of Cu, Ti, Cr, Ta, Mo, Ni, Al, Nb, Au, Pd, and Ru, wherein the second element is different from the first element.

18. The laminate according to any one of claims 5, 8, and 15, wherein the laminate is building glass or a reflector or a reflective wiring electrode for a liquid crystal display device.

19. A liquid crystal display device having the reflecting layer according to any one of claims 1 to 3.

20. A liquid crystal display device having the laminate according to any one of claims 4 to 9, and 12 to 17.

21. A liquid crystal display device having the liquid crystal display device according to claim 19 or claim 20.
